(19) Europäisches Patentamt
European Patent Office
Office européen des brevets

(11) EP 4 462 824 A1

(12) **EUROPEAN PATENT APPLICATION**
published in accordance with Art. 153(4) EPC

(43) Date of publication:
13.11.2024 Bulletin 2024/46

(21) Application number: 23752249.5

(22) Date of filing: 29.01.2023

(51) International Patent Classification (IPC):
H04W 4/02 (2018.01)    H04W 72/25 (2023.01)
H04W 40/20 (2009.01)   H04W 64/00 (2009.01)

(52) Cooperative Patent Classification (CPC):
H04W 4/02; H04W 40/20; H04W 64/00;
H04W 72/25

(86) International application number:
PCT/CN2023/073638

(87) International publication number:
WO 2023/151469 (17.08.2023 Gazette 2023/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.02.2022 CN 202210130537

(71) Applicant: Huawei Technologies Co., Ltd.
Shenzhen, Guangdong 518129 (CN)

(72) Inventors:
• LI, Jianfeng
  Shenzhen, Guangdong 518129 (CN)
• GAO, Xin
  Shenzhen, Guangdong 518129 (CN)
• LIU, Mengting
  Shenzhen, Guangdong 518129 (CN)

(74) Representative: Pfenning, Meinig & Partner mbB
Patent- und Rechtsanwälte
Theresienhöhe 11a
80339 München (DE)

(54) **LOCATING METHOD AND APPARATUS**

(57) This application provides a positioning method and apparatus. In the technical solution provided in this application, a network server can receive N pieces of phase information sent by a first communication device, where the N pieces of phase information are obtained based on one or more reference signals sent by a second communication device; and then determine a distance between the first communication device and the second communication device based on the N pieces of phase information. According to the positioning method provided in this application, measurement accuracy of the measured distance between the first communication device and the second communication device can be improved.

FIG. 4

## Description

This application claims priority to Chinese Patent Application No. 202210130537.4, filed with the China National Intellectual Property Administration on February 11, 2022 and entitled "POSITIONING METHOD AND APPARATUS", which is incorporated herein by reference in its entirety.

## TECHNICAL FIELD

This application relates to the field of communication technologies, and in particular, to a positioning method and apparatus.

## BACKGROUND

A positioning technology of a mobile communication system is a technology of estimating a location of a terminal device based on a distance from the terminal device to a base station. Therefore, how to accurately measure the distance from the terminal device to the base station is a key to implementing the positioning technology in the mobile communication system.

Currently, in the mobile communication system, common positioning technologies mainly include the time of arrival (time of arrival, TOA) and the time difference of arrival (time difference of arrival, TDOA). For the TOA, a ranging principle is to obtain a distance between a base station and a terminal device by multiplying, by a speed of light, transmission time that is of a received line of sight signal and that is measured by the base station or the terminal device. However, for the TDOA technology, a positioning principle is to obtain distance differences between a plurality of base stations and a terminal device by measuring differences between time at which the plurality of base stations receive signals of the terminal device, and then obtain a location of the terminal device with reference to locations of transmit ends after the distance differences between the plurality of base stations and the terminal device are obtained.

However, according to research, it is found that ranging accuracy of the TOA technology or the TDOA technology is related to a bandwidth. Usually, a larger bandwidth indicates higher ranging accuracy. However, because spectrum resources are limited, for example, a maximum bandwidth supported by an "FR1 frequency band" in a 5th generation (5th generation, 5G) mobile communication system is 100 MHz, a positioning error caused by using the TOA technology or the TDOA technology ranges from approximately one meter to dozens of meters or larger. Consequently, to meet a requirement of higher accuracy proposed in the 3rd generation partnership project (the 3rd generation partnership project, 3GPP) is difficult.

Therefore, how to improve ranging accuracy becomes a technical problem to be urgently resolved.

## SUMMARY

This application provides a positioning method and apparatus, to improve ranging accuracy of a measured distance between communication devices, thereby improving positioning accuracy between the communication devices.

According to a first aspect, this application provides a positioning method, applied to a first communication device. The method includes: receiving one or more reference signals sent by a second communication device; and sending N pieces of phase information, where the N pieces of phase information are obtained based on the one or more reference signals, the N pieces of phase information are used to determine a distance between the first communication device and the second communication device, and N is a positive integer.

In an implementation, the one or more reference signals are sent by the second communication device on M frequency resources. It should be noted herein that a value relationship between M and N is not limited in this embodiment. In an example, when the second communication device sends the one or more reference signals on the M frequency resources, if the N pieces of phase information obtained based on the one or more reference signals one-to-one correspond to center frequencies of the M frequency resources, M is equal to N. In another example, when the M frequency resources are a frequency band (M = 1), the second communication device may send a plurality of reference signals on a plurality of carrier components (carrier components, CCs), and obtain one piece of phase information based on each of the reference signals (N > 1). Therefore, in this case, M is less than N. In still another example, when the M frequency resources are subcarriers (M > 1), the second communication device may send a single reference signal on a single CC, and obtain phase information of a center frequency of the single CC based on the reference signal (N = 1). Therefore, in this case, M is greater than N.

In this embodiment, the N pieces of phase information are used to determine the distance between the first communication device and the second communication device. It should be understood that the determining a distance between the first communication device and the second communication device in this application includes: obtaining absolute position coordinates/relative position coordinates of the communication device, obtaining a distance from another communication device, obtaining a pseudo distance from the another communication device, obtaining a direction/angle from the another communication device, and the like. In addition, in a possible implementation, when the positioning method in this embodiment is applied to a positioning scenario in a fifth generation mobile communication system, the sending N pieces of phase information in this embodiment means that the first communication device sends the N pieces of phase information to a network server (for example, a location management function (location management function, LMF) server, which may also be referred to as a positioning server, or a positioning service management function). When the ranging method in this embodiment is applied to a sidelink positioning scenario, the sending N pieces of phase information in this embodiment means that the first communication device sends the N pieces of phase information to the second communication device.

According to the positioning method provided in this embodiment, the first communication device can send the N pieces of phase information after receiving the one or more reference signals sent by the second communication device, where the N pieces of phase information are used to determine the distance between the first communication device and the second communication device.

With reference to the first aspect, in a possible implementation, N is a positive integer greater than or equal to 2.

With reference to the first aspect, in a possible implementation, the one or more reference signals are sent by the second communication device on the M frequency resources, and M is a positive integer.

With reference to the first aspect, in a possible implementation, the N pieces of phase information are N carrier phase values of the one or more reference signals, the N carrier phase values one-to-one correspond to N frequencies of the one or more reference signals, and the N frequencies are included in the M frequency resources. To be specific, any one piece of the N pieces of phase information includes a carrier phase value of a reference signal that is of a corresponding frequency and that is received by the first communication device, and the N pieces of phase information one-to-one correspond to the N frequencies in the M frequency resources.

For example, during specific implementation, the first communication device may first obtain the N frequencies of the one or more reference signals, where the N frequencies are included in the M frequency resources; then determine a carrier phase value corresponding to each of the N frequencies; and then determine, as the N pieces of phase information, the N carrier phase values that one-to-one correspond to the N frequencies.

It should be noted herein that how to obtain the N frequencies is not limited in this embodiment. For example, the N frequencies may be obtained by an LMF, by the second communication device, through local preconfiguration, or in another manner.

With reference to the first aspect, in a possible implementation, each of the N pieces of phase information is obtained by linearly combining K carrier phase values of the one or more reference signals, the K carrier phase values one-to-one correspond to K frequencies of the one or more reference signals, the K frequencies are included in the M frequency resources, and K is a positive integer.

For example, during specific implementation, the first communication device may first obtain the K frequencies of the one or more reference signals, where the K frequencies are included in the M frequency resources; then determine a carrier phase value corresponding to each of the K frequencies; and then determine the N pieces of phase information based on the K carrier phase values corresponding to the K frequencies, where any one piece of the N pieces of phase information is obtained by linearly combining the K carrier phase values. It should be noted herein that how to obtain the K frequencies is not limited in this embodiment. For example, the K frequencies may be obtained by an LMF, by the second communication device, through local preconfiguration, or in another manner.

With reference to the first aspect, in a possible implementation, the method further includes: sending N pieces of frequency information, where the N pieces of frequency information one-to-one correspond to the N pieces of phase information.

It should be noted herein that how to obtain the N frequencies is not limited in this embodiment. For example, the N frequencies may be obtained by an LMF, by the second communication device, through local preconfiguration, or in another manner.

With reference to the first aspect, in a possible implementation, the positioning method is applied to an uplink and downlink positioning scenario in the fifth generation mobile communication system.

With reference to the first aspect, in a possible implementation, in the uplink and downlink positioning scenario in the fifth generation mobile communication system, the first communication device is a terminal device, and the second communication device is an access network device.

With reference to the first aspect, in a possible implementation, in the uplink and downlink positioning scenario in the fifth generation mobile communication system, the first communication device is an access network device, and the second communication device is a terminal device.

With reference to the first aspect, in a possible implementation, the positioning method is applied to the sidelink positioning scenario.

With reference to the first aspect, in a possible implementation, in the sidelink positioning scenario, the first communication device is a first terminal device or a roadside unit (roadside unit, RSU), and the second communication device is a second terminal device.

With reference to the first aspect, in a possible implementation, in the sidelink positioning scenario, the first communication device is a first terminal device, and the second communication device is a roadside unit RSU.

With reference to the first aspect, in a possible implementation, the method further includes: sending a first linear combination coefficient and/or a frequency set, where the first linear combination coefficient indicates a first linear relationship, the frequency set includes the N frequencies, and the N frequencies one-to-one correspond to the N pieces of phase information.

For example, in the uplink and downlink positioning scenario in the fifth generation mobile communication system, the network device may send the first linear combination coefficient to the LMF server. For another example, in the sidelink positioning scenario, the second terminal device may send the first linear combination coefficient to the first terminal device or the RSU.

With reference to the first aspect, in a possible implementation, the reference signal includes one or more of the following information: a positioning reference signal (positioning reference signal, PRS), a sounding reference signal (sounding reference signal, SRS), a positioning sounding reference signal (positioning sounding reference signal, POS-SRS), a tracking reference signal (tracking reference signal, TRS), a channel state information-reference signal (channel state information-reference signal, CSI-RS), a demodulation reference signal (demodulation reference signal, DMRS), a phase tracking reference signal (phase tracking reference signal, PTRS), or a sidelink reference signal.

For example, in the uplink and downlink positioning scenario in the fifth generation mobile communication system, when the first communication device is the terminal device, and the second communication device is the access network device, the reference signal may be the positioning reference signal PRS.

For example, in the uplink and downlink positioning scenario in the fifth generation mobile communication system, when the first communication device is the access network device, and the second communication device is the terminal device, the reference signal may be the sounding reference signal SRS.

According to a second aspect, this application provides a positioning method. The method includes: receiving N pieces of phase information from a first communication device, where the N pieces of phase information are obtained based on one or more reference signals sent by a second communication device, the N pieces of phase information are used to determine a distance between the first communication device and the second communication device, and N is a positive integer; and determining the distance between the first communication device and the second communication device based on the N pieces of phase information.

It should be noted herein that the distance between the first communication device and the second communication device in this application is also referred to as a target distance, and does not constitute a limitation on this application. In an implementation, the determining the distance between the first communication device and the second communication device based on the N pieces of phase information includes: determining the distance between the first communication device and the second communication device based on a first frequency, a first phase, and a first mapping relationship, where the first frequency is a frequency value that has a first linear relationship with N pieces of frequency information, the N pieces of frequency information one-to-one correspond to the N pieces of phase information, the first phase is a phase value that has the first linear relationship with the N pieces of phase information, and the first mapping relationship includes a mapping relationship between a distance between communication devices, a phase, and a frequency.

Optionally, when N is greater than or equal to 2, any first frequency may be determined based on the N frequencies that one-to-one correspond to the N pieces of phase information, so that a high-accuracy target distance can be determined more conveniently or a target distance with higher accuracy can be determined more conveniently. In addition, in a possible implementation, in this embodiment, when the target distance is determined based on the N pieces of phase information, a first distance further needs to be obtained. The first distance is, for example, a relatively rough distance between the first communication device and the second communication device that is obtained by the network server or the terminal device by using a current method (for example, a TOA ranging method or a TDOA ranging method).

It may be understood that, in this embodiment, the first distance is adjusted with reference to the N pieces of phase information on a basis that the first distance is determined by the network server or the terminal device. Therefore, the positioning method provided in this embodiment has higher accuracy.

With reference to the second aspect, in a possible implementation, the determining the distance between the first communication device and the second communication device based on the N pieces of phase information includes: determining the distance between the first communication device and the second communication device based on a first frequency, a first phase, and a first mapping relationship, where the first frequency is a frequency value that has a first linear relationship with N pieces of frequency information, the N pieces of frequency information one-to-one correspond to the N pieces of phase information, the first phase is a phase value that has the first linear relationship with the N pieces of phase information, and the first mapping relationship includes a mapping relationship between a distance between communication devices, a phase, and a frequency.

With reference to the second aspect, in a possible implementation, the determining the distance between the first communication device and the second communication device based on a first frequency, a first phase, and a first mapping relationship includes: determining a first integer ambiguity based on a first distance, the first frequency, the first phase, and the first mapping relationship; and determining the distance between the first communication device and the second communication device based on the first integer ambiguity, the first frequency, the first phase, and the first mapping relationship.

With reference to the second aspect, in a possible implementation, the first mapping relationship meets the following relational expression:

$$\rho = \frac{c}{f}(N + \frac{\varphi}{2\pi})$$

$\rho$ represents a distance between communication devices, N represents an integer ambiguity, f represents a frequency, $\phi$ represents a phase, and c represents a speed of light.

With reference to the second aspect, in a possible implementation, the method further includes: receiving a first linear combination coefficient and/or a frequency set, where the first linear combination coefficient indicates the first linear relationship, and the frequency set includes the N frequencies.

For example, a first linear combination coefficient and/or a frequency set that are/is configured by the network server or the second communication device are/is received.

With reference to the second aspect, in a possible implementation, the first linear combination coefficient is one or more of 0, -1, and 1.

According to a third aspect, this application provides a positioning method, applied to a first communication device. The method includes: receiving one or more reference signals sent by a second communication device; determining a distance between the first communication device and the second communication device based on N pieces of phase information, where the N pieces of phase information are obtained based on the one or more reference signals, the N pieces of phase information are used to determine the distance between the first communication device and the second communication device, and N is a positive integer; and sending first information, where the first information indicates the distance between the first communication device and the second communication device.

It should be noted herein that the distance between the first communication device and the second communication device in this application is also referred to as a target distance, and does not constitute a limitation on this application. In an implementation, the one or more reference signals are sent by the second communication device on M frequency resources. More specifically, in this embodiment, M is an integer greater than 1 or equal to 1. For example, M is a positive integer greater than or equal to 2. In addition, in a possible implementation, when the positioning method in this embodiment is applied to a positioning scenario in a fifth generation mobile communication system, the sending first information in this embodiment means that the first communication device sends the first information to a network server (for example, an LMF server). When the positioning method in this embodiment is applied to a sidelink positioning scenario, the sending first information in this embodiment means that the first communication device sends the first information to the second communication device.

Optionally, when N is greater than or equal to 2, any first frequency may be determined based on the N frequencies that one-to-one correspond to the N pieces of phase information, so that a high-accuracy target distance can be determined more conveniently or a target distance with higher accuracy can be determined more conveniently. In addition, in a possible implementation, in this embodiment, when the target distance is determined based on the N pieces of phase information, a first distance further needs to be obtained. The first distance is a relatively rough distance between the first communication device and the second communication device that is obtained by the network server or a terminal device by using a current method (for example, a TOA ranging method or a TDOA ranging method).

It may be understood that, in this embodiment, the first distance is adjusted with reference to the N pieces of phase information on a basis that the first distance is determined by the first communication device. Therefore, the positioning method provided in this embodiment has higher accuracy.

With reference to the third aspect, in a possible implementation, the determining a distance between the first communication device and the second communication device based on the N pieces of phase information includes: determining the distance between the first communication device and the second communication device based on a first frequency, a first phase, and a first mapping relationship, where the first frequency is a frequency value that has a first linear relationship with N pieces of frequency information, the N pieces of frequency information one-to-one correspond to the N pieces of phase information, the first phase is a phase value that has the first linear relationship with the N pieces of phase information, and the first mapping relationship includes a mapping relationship between a distance between communication devices, a phase, and a frequency.

With reference to the third aspect, in a possible implementation, the determining the distance between the first communication device and the second communication device based on a first frequency, a first phase, and a first mapping relationship includes: determining a first integer ambiguity based on a first distance, the first frequency, the first phase, and the first mapping relationship; and determining the distance between the first communication device and the second communication device based on the first integer ambiguity, the first frequency, the first phase, and the first mapping relationship.

With reference to the third aspect, in a possible implementation, the first mapping relationship meets the

following relational expression:

$$\rho = \frac{c}{f}(N + \frac{\varphi}{2\pi})$$

$p$ represents a distance between communication devices, $N$ represents an integer ambiguity, $f$ represents a frequency, $\phi$ represents a phase, and c represents a speed of light.

With reference to the third aspect, in a possible implementation, the method further includes: receiving a first linear combination coefficient and/or a frequency set, where the first linear combination coefficient indicates the first linear relationship, and the frequency set includes the N frequencies.

For example, a first linear combination coefficient and/or a frequency set that are/is configured by the network server or the second communication device are/is received.

With reference to the third aspect, in a possible implementation, the first linear combination coefficient is one or more of 0, -1, and 1.

With reference to the third aspect, in a possible implementation, the first information includes the distance between the first communication device and the second communication device.

With reference to the third aspect, in a possible implementation, the first information includes one or more of the following information: information about a difference between the distance between the first communication device and the second communication device and the first distance, identifier information of a source of the distance between the first communication device and the second communication device, and accuracy information of the distance between the first communication device and the second communication device.

With reference to the third aspect, in a possible implementation, the positioning method is applied to an uplink and downlink positioning scenario in a fifth generation mobile communication system.

With reference to the third aspect, in a possible implementation, when the positioning method is applied to the uplink and downlink positioning scenario in the fifth generation mobile communication system, the first communication device is a terminal device, and the second communication device is an access network device.

With reference to the third aspect, in a possible implementation, when the positioning method is applied to the uplink and downlink positioning scenario in the fifth generation mobile communication system, the first communication device is an access network device, and the second communication device is a terminal device.

With reference to the third aspect, in a possible implementation, the positioning method is applied to a sidelink positioning scenario.

With reference to the third aspect, in a possible implementation, when the positioning method is applied to the sidelink positioning scenario, the first communication device is a first terminal device or a roadside unit RSU, and the second communication device is a second terminal device.

With reference to the third aspect, in a possible implementation, when the positioning method is applied to the sidelink positioning scenario, the first communication device is a first terminal device, and the second communication device is a roadside unit RSU.

With reference to the third aspect, in a possible implementation, the reference signal includes one or more of the following information: a positioning reference signal (positioning reference signal, PRS), a sounding reference signal (sounding reference signal, SRS), a positioning sounding reference signal (positioning sounding reference signal, POS-SRS), a tracking reference signal (tracking reference signal, TRS), a channel state information-reference signal (channel state information-reference signal, CSI-RS), a demodulation reference signal (demodulation reference signal, DMRS), a phase tracking reference signal (phase tracking reference signal, PTRS), or a sidelink reference signal.

For example, when the positioning method is applied to the uplink and downlink positioning scenario in the fifth generation mobile communication system, the first communication device is the terminal device, the second communication device is the access network device, and the reference signal includes the positioning reference signal PRS.

For example, when the positioning method is applied to the uplink and downlink positioning scenario in the fifth generation mobile communication system, the first communication device is the access network device, the second communication device is the terminal device, and the reference signal includes the sounding reference signal SRS.

According to a fourth aspect, this application provides a positioning method, applied to a second communication device. The method includes: sending one or more reference signals, where M is a positive integer.

With reference to the fourth aspect, in a possible implementation, the sending one or more reference signals includes: sending the one or more reference signals on M frequency resources, where M is a positive integer.

With reference to the fourth aspect, in a possible implementation, the method further includes: sending a first linear combination coefficient and/or a frequency set, where the first linear combination coefficient indicates a first linear relationship, the frequency set includes N frequencies, N is a positive integer, and the first linear relationship indicates a mapping relationship between the N frequencies and a first frequency.

According to a fifth aspect, this application provides a positioning apparatus, used in a first communication device. The apparatus includes: a transceiver module, configured to receive one or more reference signals sent by a second communication device. The transceiver module is further configured to send N pieces of phase information, where the N pieces of phase information are obtained based on the one or more reference signals, the N pieces of phase information are used to determine a distance between the first communication device and the second communication device, and N is a positive integer.

With reference to the fifth aspect, in a possible implementation, N is a positive integer greater than or equal to 2.

With reference to the fifth aspect, in a possible implementation, the one or more reference signals are sent by the second communication device on M frequency resources, and M is a positive integer.

With reference to the fifth aspect, in a possible implementation, the N pieces of phase information are N carrier phase values of the one or more reference signals, the N carrier phase values one-to-one correspond to N frequencies of the one or more reference signals, and the N frequencies are included in the M frequency resources.

With reference to the fifth aspect, in a possible implementation, each of the N pieces of phase information is obtained by linearly combining K carrier phase values of the one or more reference signals, the K carrier phase values one-to-one correspond to K frequencies of the one or more reference signals, the K frequencies are included in the M frequency resources, and K is a positive integer.

With reference to the fifth aspect, in a possible implementation, the positioning method is applied to an uplink and downlink positioning scenario in a fifth generation mobile communication system.

With reference to the fifth aspect, in a possible implementation, in the uplink and downlink positioning scenario in the fifth generation mobile communication system, the first communication device is a terminal device, and the second communication device is an access network device.

With reference to the fifth aspect, in a possible implementation, in the uplink and downlink positioning scenario in the fifth generation mobile communication system, the first communication device is an access network device, and the second communication device is a terminal device.

With reference to the fifth aspect, in a possible implementation, the positioning method is applied to a sidelink positioning scenario.

With reference to the fifth aspect, in a possible implementation, in the sidelink positioning scenario, the first communication device is a first terminal device or a roadside unit (roadside unit, RSU), and the second communication device is a second terminal device.

With reference to the fifth aspect, in a possible implementation, in the sidelink positioning scenario, the first communication device is a first terminal device, and the second communication device is a roadside unit RSU.

With reference to the fifth aspect, in a possible implementation, the reference signal includes one or more of the following information: a positioning reference signal (positioning reference signal, PRS), a sounding reference signal (sounding reference signal, SRS), a positioning sounding reference signal (positioning sounding reference signal, POS-SRS), a tracking reference signal (tracking reference signal, TRS), a channel state information-reference signal (channel state information-reference signal, CSI-RS), a demodulation reference signal (demodulation reference signal, DMRS), a phase tracking reference signal (phase tracking reference signal, PTRS), or a sidelink reference signal.

According to a sixth aspect, this application provides a positioning apparatus. The apparatus includes: a transceiver module, configured to receive N pieces of phase information from a first communication device, where the N pieces of phase information are obtained based on one or more reference signals sent by a second communication device, the N pieces of phase information are used to determine a distance between the first communication device and the second communication device, and N is a positive integer; and a processing module, configured to determine the distance between the first communication device and the second communication device based on the N pieces of phase information.

With reference to the sixth aspect, in a possible implementation, the processing module is specifically configured to: determine the distance between the first communication device and the second communication device based on a first frequency, a first phase, and a first mapping relationship, where the first frequency is a frequency value that has a first linear relationship with N pieces of frequency information, the N pieces of frequency information one-to-one correspond to the N pieces of phase information, the first phase is a phase value that has the first linear relationship with the N pieces of phase information, and the first mapping relationship includes a mapping relationship between a distance between communication devices, a phase, and a frequency.

With reference to the sixth aspect, in a possible implementation, the processing module is specifically configured to: determine a first integer ambiguity based on a first distance, the first frequency, the first phase, and the first mapping relationship; and determine the distance between the first communication device and the second communication device based on the first integer ambiguity, the first frequency, the first phase, and the first mapping relationship.

With reference to the sixth aspect, in a possible implementation, the first mapping relationship meets the following relational expression:

$$\rho = \frac{c}{f}\left(N + \frac{\varphi}{2\pi}\right)$$

$\rho$ represents a distance between communication devices, $N$ represents an integer ambiguity, $f$ represents a frequency, $\phi$ represents a phase, and c represents a speed of light.

With reference to the sixth aspect, in a possible implementation, the transceiver module is further configured to: receive a first linear combination coefficient and/or a frequency set, where the first linear combination coefficient indicates the first linear relationship, and the frequency set includes the N frequencies.

With reference to the sixth aspect, in a possible implementation, the first linear combination coefficient is one or more of 0, -1, and 1.

According to a seventh aspect, this application provides a positioning apparatus, used in a first communication device. The apparatus includes: a transceiver module, configured to receive one or more reference signals sent by a second communication device; and a processing module, configured to determine a distance between the first communication device and the second communication device based on N pieces of phase information, where the N pieces of phase information are obtained based on the one or more reference signals, the N pieces of phase information are used to determine the distance between the first communication device and the second communication device, and N is a positive integer. The transceiver module is further configured to send first information, where the first information indicates the distance between the first communication device and the second communication device.

With reference to the seventh aspect, in a possible implementation, the processing module is specifically configured to: determine the distance between the first communication device and the second communication device based on a first frequency, a first phase, and a first mapping relationship, where the first frequency is a frequency value that has a first linear relationship with N pieces of frequency information, the N pieces of frequency information one-to-one correspond to the N pieces of phase information, the first phase is a phase value that has the first linear relationship with the N pieces of phase information, and the first mapping relationship includes a mapping relationship between a distance between communication devices, a phase, and a frequency.

With reference to the seventh aspect, in a possible implementation, the processing module is specifically configured to: determine a first integer ambiguity based on a first distance, the first frequency, the first phase, and the first mapping relationship; and determine the distance between the first communication device and the second communication device based on the first integer ambiguity, the first frequency, the first phase, and the first mapping relationship.

With reference to the seventh aspect, in a possible implementation, the first mapping relationship meets the following relational expression:

$$\rho = \frac{c}{f}\left(N + \frac{\varphi}{2\pi}\right)$$

$\rho$ represents a distance between communication devices, $N$ represents an integer ambiguity, $f$ represents a frequency, $\phi$ represents a phase, and c represents a speed of light.

With reference to the seventh aspect, in a possible implementation, the transceiver module is further configured to: receive a first linear combination coefficient and/or a frequency set, where the first linear combination coefficient indicates the first linear relationship, and the frequency set includes the N frequencies.

With reference to the seventh aspect, in a possible implementation, the first linear combination coefficient is one or more of 0, -1, and 1.

With reference to the seventh aspect, in a possible implementation, the first information includes the distance between the first communication device and the second communication device.

With reference to the seventh aspect, in a possible implementation, the first information includes one or more of the following information: information about a difference between the distance between the first communication device and the second communication device and the first distance, identifier information of a source of the distance between the first communication device and the second communication device, and accuracy information of the distance between the first communication device and the second communication device.

With reference to the seventh aspect, in a possible implementation, the positioning method is applied to an uplink and downlink positioning scenario in a fifth generation mobile communication system.

With reference to the seventh aspect, in a possible implementation, when the positioning method is applied to the uplink and downlink positioning scenario in the fifth generation mobile communication system, the first communication device is a terminal device, and the second communication device is an access network device.

With reference to the seventh aspect, in a possible implementation, when the positioning method is applied to the uplink and downlink positioning scenario in the fifth generation mobile communication system, the first communication device is an access network device, and the second communication device is a terminal device.

With reference to the seventh aspect, in a possible implementation, the positioning method is applied to a sidelink positioning scenario.

With reference to the seventh aspect, in a possible implementation, when the positioning method is applied to the sidelink positioning scenario, the first communication device is a first terminal device or a roadside unit RSU, and the second communication device is a second terminal device.

With reference to the seventh aspect, in a possible implementation, when the positioning method is applied to the sidelink positioning scenario, the first communication device is a first terminal device, and the second communication device is a roadside unit RSU.

With reference to the seventh aspect, in a possible implementation, the reference signal includes one or more of the following information: a positioning reference signal (positioning reference signal, PRS), a sounding reference signal (sounding reference signal, SRS), a positioning sounding reference signal (positioning sounding reference signal, POS-SRS), a tracking reference signal (tracking reference signal, TRS), a channel state information-reference signal (channel state information-reference signal, CSI-RS), a demodulation reference signal (demodulation reference signal, DMRS), a phase tracking reference signal (phase tracking reference signal, PTRS), or a sidelink reference signal.

According to an eighth aspect, this application provides a positioning apparatus, used in a second communication device. The apparatus includes: a transceiver module, configured to send one or more reference signals, where M is a positive integer.

With reference to the eighth aspect, in a possible implementation, the transceiver module is specifically configured to send the one or more reference signals on M frequency resources, where M is a positive integer.

With reference to the eighth aspect, in a possible implementation, the transceiver module is further configured to send a first linear combination coefficient and/or a frequency set, where the first linear combination coefficient indicates a first linear relationship, the frequency set includes N frequencies, N is a positive integer, and the first linear relationship indicates a mapping relationship between the N frequencies and a first frequency.

According to a ninth aspect, this application provides a positioning apparatus. The apparatus includes one or more processors, and the one or more processors are configured to run a computer program or instructions. When the one or more processors execute the computer instruction or the instructions, the communication apparatus is enabled to perform the method according to any one of the first aspect to the fourth aspect or the possible implementations of the first aspect to the fourth aspect.

In some possible implementations, the communication apparatus further includes one or more communication interfaces, the one or more communication interfaces are coupled to one or more processors, and the one or more communication interfaces are configured to communicate with a module other than the communication apparatus. The communication interface may also be described as an input/output interface, and the input/output interface may include an input interface and an output interface.

In some possible implementations, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this application, the processor and the memory may alternatively be integrated into one component. In other words, the processor and the memory may alternatively be integrated together.

According to a tenth aspect, this application provides a computer-readable medium. The computer-readable medium stores program code to be executed by a computer. The program code includes instructions used to perform the method according to any one of the first aspect to the fourth aspect or the possible implementations of the first aspect to the fourth aspect.

According to an eleventh aspect, this application provides a computer program product. The computer program product includes computer program code. When the computer program code runs on a computer, the computer is enabled to implement the method according to any one of the first aspect to the fourth aspect or the possible implementations of the first aspect to the fourth aspect.

For technical effects brought by any one of the implementations of the fifth aspect to the eleventh aspect, refer to the technical effects brought by any one of the possible implementations of the first aspect. Details are not described.

**BRIEF DESCRIPTION OF DRAWINGS**

FIG. 1 is a diagram of an architecture of an application scenario according to this application;
FIG. 2 is a diagram of an architecture of a positioning system according to an embodiment of this application;
FIG. 3 is a diagram of a structure of a carrier phase ranging technology according to an embodiment of this application;
FIG. 4 is a schematic flowchart of a positioning method according to an embodiment of this application;
FIG. 5 is a schematic flowchart of a positioning method according to another embodiment of this application;
FIG. 6 is a diagram of a structure of communication between communication devices based on a carrier with a plurality of frequencies according to an embodiment of this application;
FIG. 7 is a diagram of a structure of construction of K first frequencies according to an embodiment of this application;
FIG. 8 is a diagram of a structure of a positioning apparatus according to an embodiment of this application;
FIG. 9 is a diagram of a structure of a positioning apparatus according to another embodiment of this application;
FIG. 10 is a diagram of a structure of a terminal device according to an embodiment of this application; and
FIG. 11 is a diagram of a structure of a positioning apparatus according to still another embodiment of this application.

**DESCRIPTION OF EMBODIMENTS**

To better understand the technical solutions provided in this application, the following first describes some concepts used in embodiments of this application.

1. Uu positioning

Sending of a positioning reference signal between user equipments (user equipments, UEs) and transmission of information such as positioning assistance data and a positioning measurement result are performed through a universal user network interface (universal user network interface, Uu). The Uu positioning requires participation of a base station.

2. Sidelink positioning

Sidelink (Sidelink) positioning is a technology in which a sidelink is used to send a sidelink positioning reference signal (sidelink positioning reference signal, S-PRS) and perform terminal positioning measurement.
Specifically, the positioning reference signal is sent between terminal devices through a direct communication interface 5 (ProSe communication 5, PC5), but information such as positioning assistance data and a positioning measurement result may be transmitted through a PC5 interface or a Uu interface. The PC interface is a direct communication interface, and does not require participation of a base station.

3. UE-based positioning method

UE is responsible for performing location calculation (when there is assistance data) and may further provide a measurement result.

4. LMF-based positioning method

A location management function (location management function, LMF)-based positioning method is also referred to as UE-assisted positioning. UE provides only measurement and does not perform location calculation. An LMF performs location calculation (when there is assistance data).
It should be noted that both Uu positioning and sidelink positioning may be classified into UE-based positioning and LMF-based positioning depending on whether a location calculation unit is the UE or the LMF. In a sidelink positioning scenario, the UE-based positioning is also referred to as sidelink-positioning in a UE-based positioning method, and the LMF-based positioning is also referred to as sidelink-assisted positioning.

5. Downlink positioning reference signal

The downlink positioning reference signal (downlink positioning reference signal, DL-PRS) is a signal used for a downlink positioning method and an uplink and downlink joint positioning method.

6. Uplink sounding reference signal

For the uplink sounding reference signal (uplink sounding reference signal, UL-SRS), in a broad sense, an SRS includes an uplink reference signal for multiple-input multiple-output (multi-input multi-output, MIMO) and an uplink positioning reference signal dedicated for positioning.

7. Positioning reference signal

The positioning reference signal (positioning reference signal, PRS) includes a downlink positioning reference signal (also referred to as DL-PRS) and an uplink positioning reference signal (also referred to as UL-SRS).

8. Sidelink positioning reference signal

The sidelink positioning reference signal (sidelink positioning reference signal, S-PRS) is a positioning reference signal transmitted on a sidelink and dedicated to a sidelink scenario.

9. Transmission point

The transmission point (transmission point, TP), also referred to as a transmission node or a sending node, represents a set of transmit antennas (for example, an antenna array (with one or more antenna elements)) that are geographically located in a same location. This concept applies to a cell, a part of a cell, or a TP supporting only a DL-PRS. The transmission node may include an antenna of a base station (ng-eNB or gNB), a remote radio unit (remote radio head, RRH), a remote antenna of the base station, an antenna of a TP supporting only a DL-PRS, and the like. One cell may include one or more transmission points.

10. Reception point

The reception point (reception point, RP), also referred to as a reception node, represents a set of receive antennas (for example, an antenna array (with one or more antenna elements)) that are geographically located in a same location. This concept applies to a cell, a part of a cell, or an RP supporting only a UL-SRS. The transmission node may include an antenna of a base station (ng-eNB or gNB), a remote radio head, a remote antenna of the base station, an antenna of an RP supporting only a UL-SRS, and the like. One cell may include one or more reception points.

11. Transmission reception node

The transmission reception node (transmission reception point, TRP) represents a set of antennas (for example, an antenna array (with one or more antenna elements)) that are geographically located in a same location and support a TP function and/or an RP function.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

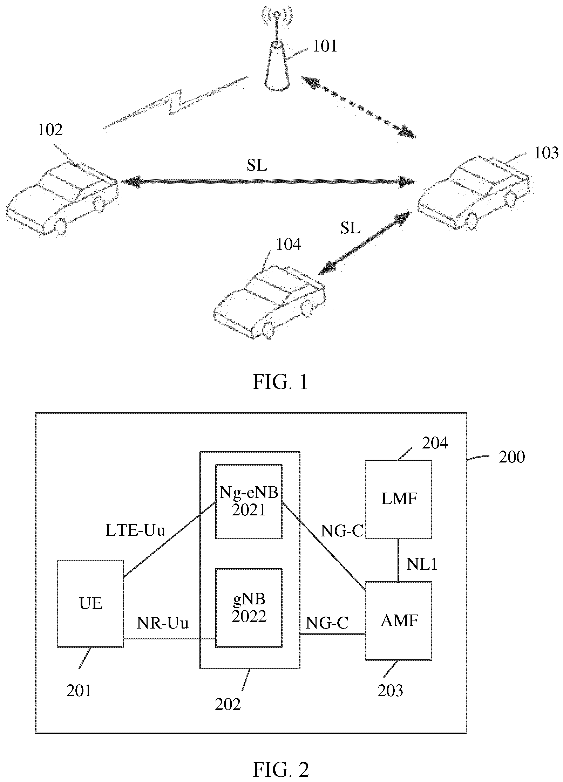

For ease of understanding, a wireless communication system applicable to embodiments of this application is described in detail by using the communication system shown in FIG. 1 as an example. As shown in FIG. 1, the communication system includes a network device 101, a terminal device 102 communicating with the network device 101, a terminal device 103 communicating with the terminal device 102, and a terminal device 104 communicating with the terminal device 103. Optionally, the network device 101 may further communicate with the terminal device 103.

Specific forms of the network device 101 and the terminal device are not limited in this embodiment of this application.

For example, the terminal device may be a device that provides voice and/or data connectivity for a user. The terminal device may also be referred to as user equipment (user equipment, UE), an access terminal (access terminal), a user unit (user unit), a user station (user station), a mobile station (mobile station), a mobile (mobile), a remote station (remote station), a remote terminal (remote terminal), mobile equipment (mobile equipment), a user terminal (user terminal), wireless telecom equipment (wireless telecom equipment), a user agent (user agent), user equipment (user equipment), or a user apparatus. The terminal device may be a station (station, STA) in a wireless local area network (wireless local area network, WLAN), or may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device, or another processing device connected to a wireless modem, an in-vehicle device, a wearable device, a vehicle, an uncrewed aerial vehicle, a helicopter, a ship, a robot, or a mechanical arm, a smart home device, a terminal in a next generation communication system (for example, a sixth generation (sixth generation, 6G) communication network), a terminal device in a future evolved public land mobile network (public land mobile network, PLMN), or the like. 5G may also be referred to as new radio (new radio, NR). In this application, for ease of description, a chip deployed in the foregoing device, or a chip may also be referred to as a terminal device.

For example, a main function of the network device 101 in FIG. 1 is to control the terminal device to access a mobile communication network in a wireless manner. The network device 101 is a part of a mobile communication system, and implements a radio access technology. For example, the network device 101 may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6th generation (6th generation, 6G) mobile communication system, a base station in a future mobile communication system, or an access node in a Wi-Fi system, or may be a module or a unit completing some of functions of a base station, for example, may be a central unit (central unit, CU), or may be a distributed unit (distributed unit, DU). A radio access network device may be a macro base station, may be a micro base station or an indoor base station, or may be a relay node, a donor node, or the like. It may be understood that all or some functions of the radio access network device in this application may alternatively be implemented by using a software function running on hardware, or may be implemented by using an instantiated virtualization function on a platform (for example, a cloud platform). A specific technology and a specific device form that are used by the radio access network device are not limited in embodiments of this application. For ease of description, the following provides descriptions by using an example in which the radio access network device is a base station.

The terminal device and the network device 101 may be deployed on the land, including indoors or outdoors and in a handheld or vehicle-mounted manner, may be deployed on a water surface, or may be deployed on an airplane, a balloon, and a satellite in the air. Application scenarios of the network device 101 and the terminal device are not limited in embodiments of this application.

The network device 101 and the terminal device may communicate with each other by using a licensed spectrum or an unlicensed spectrum, or may communicate with each other by using both a licensed spectrum and an unlicensed spectrum; or may communicate with each other by using a spectrum below 6 gigahertz (gigahertz, GHz) or a spectrum above 6 GHz, or may communicate with each other by using both a spectrum below 6 GHz and a spectrum above 6 GHz. A spectrum resource used for wireless communication is not limited in embodiments of this application.

In embodiments of this application, a base station function may alternatively be performed by a module (for example, a chip) in a base station, or may be performed by a control subsystem that includes the base station function. The control subsystem that includes the base station function herein may be a control center in an application scenario of the foregoing terminal, such as a smart grid, industrial control, smart transportation, and a smart city. A terminal function may alternatively be performed by a module (for example, a chip or a modem) in a terminal, or may be performed by an apparatus that includes the terminal function.

In addition, all terminal devices shown in FIG. 1 may be within coverage of the network device 101; or some terminal devices may be within coverage of the network device 101, and some terminal devices are not within coverage of the network device 101; or none of the terminal devices is within coverage of the network device 101. This is not limited in embodiments of this application.

For the communication system shown in FIG. 1, there is a first communication interface between the network device 101 and the terminal device 102 and between the network device 101 and the terminal device 103, and there is a second interface between the terminal device 102 and the terminal device 103. Optionally, there is also a second interface between the terminal device 103 and the terminal device 104.

For example, the first interface may be a Uu interface, and the second interface may be a PC5 interface.

It should be understood that there may be two communication scenarios for the communication system shown in FIG. 1.

The first communication scenario includes communication between a terminal device and a network device, for example, communication between the terminal device 102 and the network device 101. More specifically, communication between the terminal device 102 and the network device 101 is referred to as uplink and downlink communication. For example, the terminal device 102 may send information to the network device 101 by using an uplink, and the network device 101 may send information to the terminal device 102 by using a downlink.

A second communication scenario includes communication between terminal devices, for example, communication between the terminal device 102 and the terminal device 103. More specifically, a link for communication between the terminal device 102 and the terminal device 103 is referred to as a sidelink, and the terminal device 102 and the terminal device 103 may transmit data on the sidelink.

It should be noted herein that a specific communication scenario between terminal devices is not limited in embodiments of this application. For example, communication between the terminal devices may be mutual communication between in-vehicle devices.

It may be understood that quantities of network devices and terminal devices shown in FIG. 1 are merely an example. In an actual process, the quantity of network devices or terminal devices may alternatively be another quantity. Certainly, the communication system may further include another network element (for example, a core network device). The access network device may be connected to the core network device. The core network device may be a network element in a 4G core (for example, an evolved packet core (evolved packet core, EPC)) network or a 5G core (5G core, 5GC) network.

It should be noted that the positioning method provided in this application may be applied to any communication system. For example, the communication system may be a new radio (new radio, NR) communication system, an NR vehicle-to-everything (vehicle-to-everything, V2X) system, or another next generation communication system. This is not limited. In addition, it should be further understood that the positioning method provided in this application may be applied to various scenarios. For example, the positioning method may be applied to one or more of the following communication scenarios: enhanced mobile broadband (enhanced mobile broadband, eMBB), ultra-reliable and low latency communications (ultra-reliable and low latency communications, URLLC), massive machine type communication (massive machine type communication, mMTC)/internet of things (internet of things, IOT), device to device (device to device, D2D), vehicle to vehicle (vehicle to vehicle, V2V), and the like.

For the communication system shown in FIG. 1, regardless of the communication scenario between the terminal device and the network device or the communication scenario between the terminal devices, how to accurately locate a location of the terminal device becomes a current research hotspot.

The communication scenario between the terminal device and the network device is used as an example. FIG. 2 is a diagram of an architecture of positioning according to an embodiment of this application. The network architecture is a 5th generation (5G) positioning architecture. As shown in FIG. 2, the architecture 200 may include user equipment (user equipment, UE) 201, an access network (access network, AN) 202, an access and mobility management function (access and mobility management function, AMF) network element 203, and a location management function (location management function, LMF) network element 204.

The AMF network element 203 is responsible for user access management, and manages and controls access of a user service. Specifically, in the positioning architecture, the AMF network element may be configured to initiate a positioning request, control a base station to perform positioning, or the like.

The LMF network element 204 is responsible for positioning management, for example, receiving a positioning request from another network element, collecting positioning data of a user, and obtaining a location of the UE 201 through positioning calculation. The LMF network element 204 may further calculate or verify a final location and any speed estimation value, and may estimate accuracy achieved. For example, the LMF network element 204 receives a location request for target UE from a serving AMF by using an "Nlmf" interface. The LMF network element 204 may further manage and configure the base station or a positioning management unit, to configure a positioning reference signal, and the like. Specifically, the LMF network element 204 may include an enhanced serving mobile location center (enhanced serving mobile location center, E-SMLC) and a secure user plane location (secure user plane location, SUPL) location platform (SUPL location platform, SLP). The SLP is used for user plane positioning, and the E-SMLC is used for control plane positioning.

As shown in FIG. 2, the UE 201 may be connected to the AMF network element 203 by using the AN 202, and the AMF network element 203 is connected to the LMF network element 204. Interfaces and connections in the architecture 200 may include "LTE-Uu", "NR-Uu", "NG-C", and "NL1". "NG-C" is a control plane connection between the AN 202 and the AMF network element 203, "LTE-Uu" is a protocol interface between an ng-eNB 2021 and the UE 201, "NR-Uu" is a protocol interface between the UE 201 and a gNB 2022, and "NL1" is a protocol interface between the LMF network element 204 and the AMF network element 203.

Currently, in all methods for positioning UE, a time of arrival (time of arrival, TOA) method and a time difference of arrival (time difference of arrival, TDOA) method are widely used. For the TOA, a positioning principle is to obtain a distance between a base station and a terminal device by multiplying, by a speed of light, transmission time that is of a received line of sight carrier signal and that is measured by the base station or the terminal device, and obtain a location of the terminal device with reference to a location of a transmit end after the distance is obtained. However, for the TDOA, a positioning principle is to obtain distance differences between a plurality of base stations and a terminal device by measuring differences between time at which the plurality of base stations receive carrier signals of the terminal device, and then obtain a location of the terminal device with reference to locations of transmit ends after the distance differences between the plurality of base stations and the terminal device are obtained. From a mathematical perspective, a movement trajectory of the positioned UE is a curve that uses any two base stations as focuses and uses a distance difference between the any two base stations as a constant difference. The positioned user equipment may obtain at least two curves by measuring and calculating at least three base stations, and a location of the positioned UE is an intersection point of the at least two curves.

The TDOA is used as an example. During specific implementation, the LMF network element requests a plurality of base stations near the positioned UE to send assistance information used for TDOA positioning. The plurality of base stations send respective positioning assistance information to the LMF network element after receiving the request. The LMF network element then sends the received positioning assistance information to the positioned UE. The LMF network element initiates a positioning information measurement request to the positioned UE. The positioned UE measures a time difference of arrival between signals of the plurality of base stations, and sends measurement information to the LMF network element. Finally, the LMF network element calculates the location of the positioned UE based on the measurement information reported by the positioned UE.

However, according to research, it is found that ranging accuracy of the TOA technology or the TDOA technology is related to a bandwidth. Usually, a larger bandwidth indicates higher ranging accuracy. However, because spectrum resources are limited, for example, a maximum bandwidth supported by an "FR1 frequency band" in a 5th generation (5th generation, 5G) mobile communication system is 100 MHz, a ranging error caused by using the TOA technology or the TDOA technology ranges from approximately one meter to dozens of meters or larger. Consequently, to meet a requirement of higher accuracy proposed in TS 22.261 of the 3rd generation partnership project (the 3rd generation partnership project, 3GPP) is difficult. Therefore, how to improve ranging accuracy becomes an urgent technical problem to be resolved.

A carrier phase ranging technology is one of main technologies for high-accuracy positioning, and measures a distance with integer ambiguity by measuring a carrier phase change of a reference signal from a transmit end to a receive end. A radio frequency signal with a frequency of 3 GHz is used as an example, and a corresponding carrier wavelength is 0.1 m. Therefore, when an integer ambiguity of a carrier phase can be correctly solved, carrier phase ranging accuracy can reach a centimeter level to a millimeter level in theory, to obtain a high-accuracy ranging result.

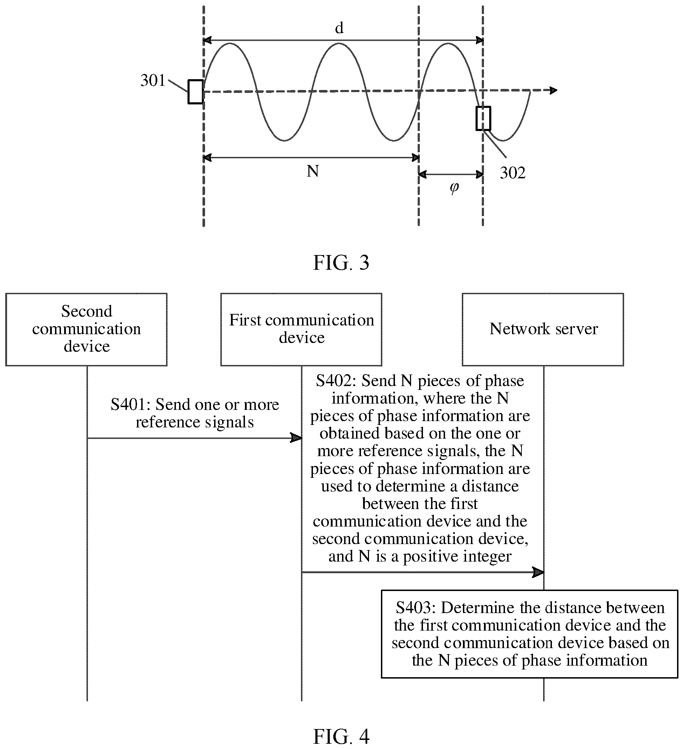

Specifically, a principle of the carrier phase ranging technology may be shown in FIG. 3. In the figure, a distance between a communication device 301 and a communication device 302 is represented, $\phi$ is a carrier phase measurement value, and $N$ represents an integer ambiguity, is an integer, and represents that $N$ carrier integer cycles are passed. It is assumed that $f$ is a carrier frequency and $c$ is a speed of light. In this case, $f, c, d$, and $\phi$ meet the following formula:

$$d = \frac{c}{f}\left(N + \frac{\varphi}{2\pi}\right)$$

Therefore, if an integer ambiguity of a carrier phase can be calculated, a high-accuracy ranging result between the communication device 301 and the communication device 302 may be obtained.

In view of this, an embodiment of this application provides a method for performing ranging between communication devices. In the ranging method provided in this application, after a first distance between the communication devices (for example, a distance obtained by using TDOA, a distance obtained by using TOA, or a distance obtained by using a cell identifier (identifier, ID), which is also referred to as a rough distance in this application) is obtained, an integer ambiguity is first determined based on the first distance and a carrier phase ranging technology, and then a distance between the communication devices is further determined based on a mapping relationship between the determined integer ambiguity, a carrier frequency, and a carrier phase measurement value, to improve ranging accuracy of a measured distance between the communication devices.

FIG. 4 is a schematic flowchart of a positioning method according to an embodiment of this application. As shown in FIG. 4, the method includes step S401, step S402, and step S403.

It should be noted herein that this embodiment is described by using an example in which communication between a first communication device and a second communication device is uplink and downlink communication. To be specific, the ranging method provided in this embodiment of this application may be applied to an uplink and downlink positioning scenario in a fifth generation mobile communication system. In addition, in the first communication device and the second communication device, one communication device is a network device, and the other communication device is a terminal device.

S401: The second communication device sends one or more reference signals; and correspondingly, the first communication device receives the one or more reference signals sent by the second communication device.

The first communication device may also be referred to as a receiving device, and the second communication device may also be referred to as a sending device.

In an implementation, the second communication device may send the one or more reference signals to the first communication device on M frequency resources. Correspondingly, the first communication device receives the one or more reference signals on the M frequency resources. The frequency resource in this implementation is a segment of contiguous spectrum resources in frequency domain, and may be one or more of a subcarrier, a resource block (resource block, RB), a bandwidth part (bandwidth part, BWP), a carrier component (carrier component, CC), a frequency band or a frequency band (band, for example, a frequency band/frequency band n41 (2515-2675 MHz)), a frequency layer (frequency layer), a frequency (frequency), and a frequency range (frequency range, FR).

During specific implementation, when sending the one or more reference signals on the M frequency resources, the second communication device may first select the M frequency resources, and then send the reference signals on the selected M frequency resources.

It should be noted herein that a specific form of the reference signal is not limited in this embodiment. For example, the reference signal includes one or more of the following information: a positioning reference signal (positioning reference signal, PRS), a sounding reference signal (sounding reference signal, SRS), a positioning sounding reference signal (positioning sounding reference signal, POS-SRS), a tracking reference signal (tracking reference signal, TRS), a channel state information-reference signal (channel state information-reference signal, CSI-RS) reference signal, a demodulation reference signal (demodulation reference signal, DMRS), a phase tracking reference signal (phase tracking reference signal, PTRS), or a sidelink reference signal.

In an example, when the positioning method is applied to the uplink and downlink positioning scenario in the fifth generation mobile communication system, the first communication device in this embodiment may be a terminal device, and the second communication device is an access network device. To be specific, the access network device first determines the M frequency resources, and then sends the reference signal to the terminal device on the M frequency resources. For example, in this case, the reference signal may be the PRS.

In another example, when the positioning method is applied to the uplink and downlink positioning scenario in the fifth generation mobile communication system, the first communication device in this embodiment may alternatively be an access network device, and the second communication device is a terminal device. To be specific, the terminal device first determines the M frequency resources, and then sends the reference signal to the access network device on the M frequency resources. For example, in this case, the reference signal may be the SRS.

It should be noted herein that the PRS and the SRS are merely examples, and another reference signal may alternatively be used. This is not limited in this embodiment of this application.

S402: The first communication device sends N pieces of phase information to a network server, where the N pieces of phase information are obtained based on the one or more reference signals, the N pieces of phase information are used to determine a distance between the first communication device and the second communication device, and N is a positive integer; and correspondingly, the network server receives the N pieces of phase information.

It may be understood that, when receiving a specific electromagnetic wave signal, a communication device may obtain a phase value of the electromagnetic wave signal. Therefore, in this embodiment, after receiving the one or more reference signals sent by the second communication device on the M frequency resources, the first communication device may measure phase information respectively corresponding to the one or more reference signals.

It should be noted herein that specific content of each of the N pieces of phase information is not limited in this embodiment.

In an example, the N pieces of phase information are N carrier phase values of the one or more reference signals, the N carrier phase values one-to-one correspond to N frequencies of the one or more reference signals, and the N frequencies are included in the M frequency resources. To be specific, any one piece of the N pieces of phase information includes a carrier phase value of a reference signal that is of a corresponding frequency and that is received by the first communication device, and the N pieces of phase information one-to-one correspond to the N frequencies in the M frequency resources. For example, during specific implementation, the first communication device may first obtain the N frequencies of the one or more reference signals, where the N frequencies are included in the M frequency resources; then determine a carrier phase value corresponding to each of the N frequencies; and then determine, as the N pieces of phase information, the N carrier phase values that one-to-one correspond to the N frequencies.

In another example, each of the N pieces of phase information is obtained by linearly combining K carrier phase values of the one or more reference signals, the K carrier phase values one-to-one correspond to K frequencies of the one or more reference signals, the K frequencies are included in the M frequency resources, and K is a positive integer. For example, during specific implementation, the first communication device may first obtain the K frequencies of the one or more reference signals, where the K frequencies are included in the M frequency resources; then determine a carrier phase value corresponding to each of the K frequencies; and then determine the N pieces of phase information based on the K carrier phase values corresponding to the K frequencies, where any one piece of the N pieces of phase information is obtained by linearly combining the K carrier phase values.

It is further noted herein that a value relationship between M and N is not limited in this embodiment.

For example, in an implementation, when the second device sends the one or more reference signals on the M frequency resources, if the N pieces of phase information obtained based on the one or more reference signals one-to-one correspond to center frequencies of the M frequency resources, M is equal to N.

For example, in another implementation, when the M frequency resources are a frequency band (M = 1), the first device may send a plurality of reference signals on a plurality of CCs, and obtain one piece of phase information based on each of the reference signals (N > 1). Therefore, in this case, M is less than N.

For example, in still another implementation, when the M frequency resources are subcarriers (M > 1), the first device may send a single reference signal on a single CC, and obtain phase information of a center frequency of the single CC based on the reference signal (N = 1). Therefore, in this case, M is greater than N.

It should be understood that the foregoing frequency may be an absolute frequency, or may be one or more of a subcarrier frequency, a carrier frequency, a resource element (resource element, RE) frequency, a center frequency, and a frequency (frequency). This is not limited in this embodiment of this application.

It should be noted herein that, for detailed descriptions about how the communication device measures phase information of a specific electromagnetic wave signal after receiving the electromagnetic wave signal, refer to implementation in a related technology. Details are not described herein.

In this embodiment, after obtaining the N pieces of phase information, the first communication device sends the N pieces of phase information to the network server (for example, an LMF server), and correspondingly, the network server receives the N pieces of phase information.

For example, it is assumed that the second communication device sends a reference signal to the first communication device by using four carrier frequencies. In this case, the first communication device measures four phase values, and then sends the four phase values to the network server.

It should be noted herein that a specific manner of sending the N pieces of phase information is not limited in this embodiment. For example, the N pieces of phase information may be directly sent, or one piece of indication information may be sent, where the indication information indicates the N pieces of phase information.

S403: The network server determines the distance between the first communication device and the second communication device based on the N pieces of phase information.

It should be noted herein that, in this embodiment, the distance between the first communication device and the second communication device may also be referred to as a target distance, and does not constitute a limitation on this embodiment of this application. In this embodiment, the network server can determine the target distance based on the N pieces of phase information after obtaining the N pieces of phase information.

In an implemention, the determining, by the network server, the target distance based on the N pieces of phase information includes: determining the target distance based on a first frequency, a first phase, and a first mapping relationship, where the first frequency includes a frequency determined based on N frequencies, the N frequencies one-to-one correspond to the N pieces of phase information, the first phase includes phase information determined based on the N pieces of phase information, and the first mapping relationship includes a mapping relationship between a distance between communication devices, a phase, and a frequency.

In this implementation, the network server needs to determine the first frequency based on the N frequencies that one-to-one correspond to the N pieces of phase information.

For example, when N is greater than or equal to 2, the first frequency includes a frequency value that has a first linear relationship with the N frequencies. For example, it is assumed that the second communication device sends the reference signal to the first communication device at four frequencies, and it is assumed that the four frequencies are respectively f1, f2, f3, and f4. In this case, values corresponding to f1, f2, f3, and f4 may be linearly combined by using a linear combination coefficient, to obtain the first frequency. It should be noted herein that, in this embodiment, the linear combination coefficient (also referred to as a first linear combination coefficient in this application) used when the N frequencies are linearly combined may be configured by the LMF server, or may be configured by the access network device. This is not limited in this embodiment of this application.

In this embodiment, the network server further determines the first phase based on the N pieces of phase information. The first phase is a corresponding phase that should be used when the first communication device communicates with the second communication device by using a signal of the first frequency.

It should be noted that, when a new frequency is obtained by performing linear combination calculation on the N frequencies by using the linear combination coefficient, a new phase value corresponding to the new frequency is equal to a value obtained by performing the same linear combination calculation on the N phase values corresponding to the N frequencies by using the same linear combination coefficient. For a detailed derivation process of this part, refer to descriptions in a related technology. Details are not described herein. Therefore, in this embodiment, when N is greater than or equal to 2, the first phase includes a phase value that has the first linear relationship with the N pieces of phase information.

In this implementation, the network server may determine the target distance after determining the first frequency, the first phase, and the first mapping relationship.

Specifically, the network server may determine a first integer ambiguity based on the first frequency, the first phase, and the first mapping relationship with reference to the first distance. Then, the distance between the first communication device and the second communication device is determined based on the first integer ambiguity, the first frequency, the first phase, and the first mapping relationship.

It should be understood that, in an uplink and downlink communication scenario, a TOA ranging method, a TDOA ranging method, or another ranging method (collectively referred to as a current ranging method) is usually used to perform measurement to obtain the distance between the first communication device and the second communication device.

For example, the first distance may be obtained based on TOA, that is, a distance between a base station and a terminal device is obtained by multiplying, by a speed of light, transmission time that is of a received line of sight carrier signal and that is measured by the base station or the terminal device.

For example, the first distance may be obtained based on the TDOA technology, that is, distance differences between a plurality of base stations and a terminal device are obtained by measuring differences between time at which the plurality of base stations receive carrier signals of the terminal device, and then a location of the terminal device may be obtained with reference to locations of the base stations after the distance differences between the plurality of base stations and the terminal device are obtained.

It should be further understood that, when the current ranging method is used, accuracy of an obtained distance between the first communication device and the second communication device is not particularly high. Therefore, in this embodiment, a distance measured by using the current ranging method is referred to as the first distance, indicating a relatively rough distance between the first communication device and the second communication device.

During specific implementation, the first mapping relationship meets the following relational expression:

$$\rho = \frac{c}{f}(N + \frac{\varphi}{2\pi})$$

$\rho$ represents a distance between communication devices, $N$ represents an integer ambiguity, $f$ represents a frequency, $\phi$ represents a phase, and $c$ represents a speed of light.

In this case, the first integer ambiguity $N$ may be first determined according to a formula

$$N = \left[ \frac{d * f}{c} - \frac{\varphi}{2\pi} \right]$$ , where [] represents rounding off, and d represents the first distance; and then the target distance is determined according to the formula

$$\rho = \frac{c}{f}\left(N + \frac{\varphi}{2\pi}\right)$$

.

According to the positioning method provided in this embodiment, the first communication device can send the N pieces of phase information after receiving the one or more reference signals sent by the second communication device, where the N pieces of phase information are used to determine the distance between the first communication device and the second communication device. Correspondingly, the network server may determine the distance between the first communication device and the second communication device based on the N pieces of phase information.

It may be understood that, in this embodiment, the first distance is adjusted with reference to the N pieces of phase information on a basis that the first distance is determined by the network server or the terminal device. Therefore, the positioning method provided in this embodiment has higher accuracy.

In an optional embodiment, in an implementation solution of obtaining the first frequency and the first phase, a first linear combination coefficient and/or a frequency set configured by the network server or the second communication device may be first obtained, where the first linear combination coefficient indicates the first linear relationship, and the frequency set includes the foregoing N pieces of frequency information. For example, the first linear combination coefficient is one or more of 0, -1, and 1.

It should be noted herein that, in the embodiment shown in FIG. 4, an example in which communication between the first communication device and the second communication device is uplink and downlink communication is used for description. In addition, the ranging method may alternatively be applied to a sidelink communication scenario. It should be understood that, in the sidelink communication scenario, in the first communication device and the second communication device, one communication device is a first terminal device or an RSU, and the other communication device is a second terminal device. It should be further understood that, in the sidelink scenario, a principle of a method for performing ranging between the first communication device and the second communication device is the same as that of the ranging method in the embodiment shown in FIG. 4. A difference lies in that after determining the N pieces of phase information, the first communication device sends the N pieces of information to the second communication device, and then the second communication device continues to perform the step of determining the distance between the first communication device and the second communication device based on the N pieces of phase information.

It should be understood that, in another implementation, in the ranging method in the foregoing embodiment, the first communication device may directly perform the step of determining the target distance. It should be noted herein that the "step" in this embodiment is merely used as an example, is a representation method used to better understand the embodiment, and does not constitute a substantive limitation on execution of the solutions in this application. For example, the "step" may alternatively be understood as a "feature". In addition, this step does not constitute any limitation on an execution sequence of the solutions in this application. In addition, all "steps" in this application are applicable to the agreement. A unified description is provided herein. When this occurs again, details are not described again.

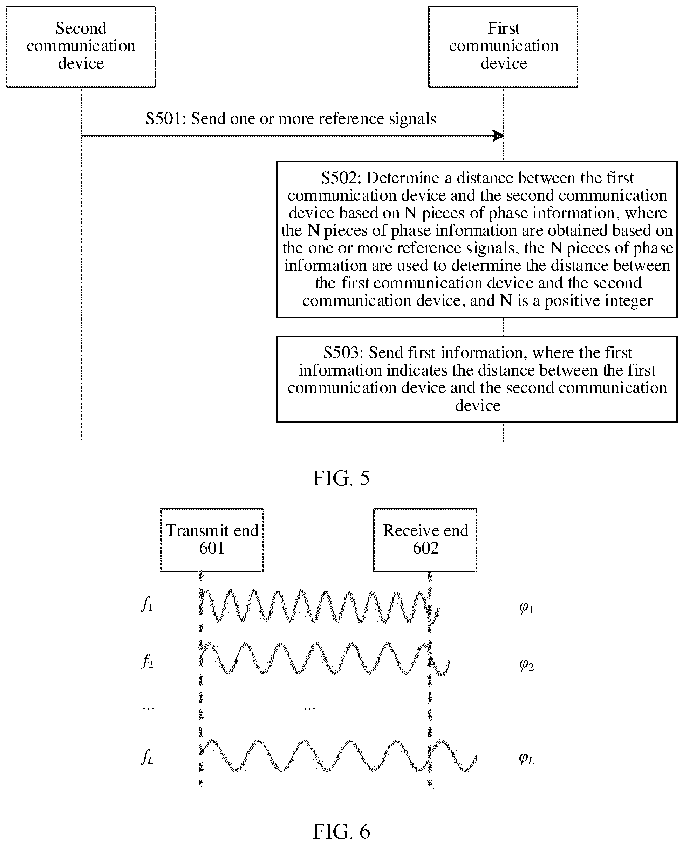

With reference to FIG. 5, the following describes a step of determining the target distance by the first communication device.

FIG. 5 is a schematic flowchart of a method for performing ranging between communication devices according to an embodiment of this application. As shown in FIG. 5, the method includes step S501, step S502, and step S503.

S501: A second communication device sends one or more reference signals. Correspondingly, a first communication device receives the one or more reference signals sent by the second communication device. The first communication device may also be referred to as a receiving device, and the second communication device may also be referred to as a sending device.

In this embodiment, the second communication device sends the one or more reference signals. Correspondingly, the first communication device receives the one or more reference signals.

In an implementation, the second communication device may send the one or more reference signals to the first communication device on M frequency resources. For a concept related to the frequency resource, refer to the description in S401 in the embodiment shown in FIG. 4. Details are not described herein again.

During specific implementation, when sending the one or more reference signals on the M frequency resources, the second communication device may first select the M frequency resources, and then send the reference signals on the selected M frequency resources.

It should be noted herein that a specific form of the reference signal is not limited in this embodiment. For example, the reference signal includes one or more of the following information: a PRS, an SRS, a POS-SRS, a TRS, a CSI-RS, a demodulation reference signal DM-RS, a PT-RS, and a sidelink reference signal.

In an example, when the positioning method is applied to an uplink and downlink positioning scenario in a fifth generation mobile communication system, the first communication device in this embodiment may be a terminal device, and the second communication device is an access network device. To be specific, the access network device first determines the M frequency resources, and then sends the reference signal to the terminal device on the M frequency resources. For example, in this case, the reference signal may be the PRS.

In another example, when the positioning method is applied to an uplink and downlink positioning scenario in a fifth generation mobile communication system, the first communication device in this embodiment may alternatively be an access network device, and the second communication device is a terminal device. To be specific, the terminal device first determines the M frequency resources, and then sends the reference signal to the access network device on the M frequency resources. For example, in this case, the reference signal may be the SRS.

It should be noted herein that the PRS and the SRS are merely examples, and another reference signal may alternatively be used. This is not limited in this embodiment of this application.

In still another example, when the method for performing ranging between communication devices is applied to a sidelink positioning scenario, the first communication device is a first terminal device or an RSU, and the second communication device is a second terminal device.

S502: The first communication device determines a distance between the first communication device and the second communication device based on N pieces of phase information, where the N pieces of phase information are obtained based on the one or more reference signals, the N pieces of phase information are used to determine the distance between the first communication device and the second communication device, and N is a positive integer.

It may be understood that, when receiving a specific electromagnetic wave signal, a communication device may obtain a phase value of the electromagnetic wave signal. Therefore, in this embodiment, after receiving the one or more reference signals sent by the second communication device, the first communication device may measure phase information respectively corresponding to the one or more reference signals.

For example, after receiving the one or more reference signals sent by the second communication device on the M frequency resources, the first communication device may measure the phase information respectively corresponding to the one or more reference signals. It should be noted herein that for a relationship between M and N, refer to the description in S402 in the embodiment shown in FIG. 4 of this application. Details are not described herein again.

In this embodiment, after the first communication device obtains the N pieces of phase information, the first communication device can determine the distance between the first communication device and the second communication device based on the N pieces of phase information. It should be noted herein that determining the distance between the first communication device and the second communication device in this embodiment is also referred to as determining a target distance.

In an implementation, the determining, by the first communication device, a target distance based on the N pieces of phase information includes: determining the target distance based on a first frequency, a first phase, and a first mapping relationship, where the first frequency includes a frequency determined based on N frequencies, the N frequencies one-to-one correspond to the N pieces of phase information, the first phase includes phase information determined based on the N pieces of phase information, and the first mapping relationship includes a mapping relationship between a distance between communication devices, a phase, and a frequency.

In this implementation, the first communication device needs to determine the first frequency based on the N frequencies that one-to-one correspond to the N pieces of phase information.

For example, when N is greater than or equal to 2, the first frequency includes a frequency value that has a first linear relationship with the N frequencies. For example, it is assumed that the second communication device sends the reference signal to the first communication device at three frequencies, and it is assumed that the three frequencies are f1, f2, and f3. In this case, values corresponding to f1, f2, and f3 may be linearly combined by using a linear combination coefficient, to obtain the first frequency. It should be noted herein that, in this embodiment, the linear combination coefficient (also referred to as a first linear combination coefficient in this application) used when the N frequencies are linearly combined may be configured by the LMF server, or may be configured by the access network device. This is not limited in this embodiment of this application.

In this embodiment, the first communication device further determines the first phase based on the N phase values. The first phase is a corresponding phase that should be used when the first communication device communicates with the second communication device by using a signal of the first frequency.

It should be noted that, when a new frequency is obtained by performing linear combination calculation on the N frequencies by using the linear combination coefficient, a new phase value corresponding to the new frequency is equal to a value obtained by performing the same linear combination calculation on the N phase values corresponding to the N frequencies by using the same linear combination coefficient. For a detailed derivation process of this part, refer to descriptions in a related technology. Details are not described herein. Therefore, in this embodiment, when N is greater than or equal to 2, the first phase includes a phase value that has the first linear relationship with the N pieces of phase information.

In this implementation, the first communication device may determine the target distance after determining the first frequency, the first phase, and the first mapping relationship.

Specifically, the first communication device may determine a first integer ambiguity based on the first frequency, the first phase, and the first mapping relationship with reference to the first distance. The first distance may be considered as a rough distance determined by the first communication device. The first distance may be obtained by the first communication device based on a TOA ranging method, a TDOA ranging method, or another ranging and positioning method.

Then, after the first integer ambiguity is determined, the target distance is determined based on the first integer ambiguity, the first frequency, the first phase, and the first mapping relationship.

During specific implementation, the first mapping relationship meets the following relational expression:

$$\rho = \frac{c}{f}(N + \frac{\varphi}{2\pi})$$

$\rho$ represents a distance between communication devices, $N$ represents an integer ambiguity, $f$ represents a frequency, $\phi$ represents a phase, and c represents a speed of light.

In this case, the first integer ambiguity N may be first determined according to a formula $N = \left[\dfrac{d*f}{c} - \dfrac{\varphi}{2\pi}\right]$, where [] represents rounding off; and then the target distance is determined according to the formula $\rho = \dfrac{c}{f}(N + \dfrac{\varphi}{2\pi})$.

S503: The first communication device sends first information, where the first information indicates the distance between the first communication device and the second communication device.

In this embodiment, after determining the distance between the first communication device and the second communication device, that is, after determining the target distance, the first communication device may send the first information to a network server, where the first information indicates the target distance.

In an implementation, the first information includes the target distance. That is, the first communication device directly reports the target distance to the network server after determining the target distance.

In another implementation, the first information includes information indicating a difference between the target distance and the first distance. To be specific, information reported by the first communication device indicates the difference between the target distance and the first distance. For example, the first communication device may implement submeter-level positioning through TOA, and may select a decimal part of the determined target distance for reporting. However, it should be understood that, because TDOA is to report a difference between time of arrival at two base stations, consistency processing needs to be performed before a high-accuracy ranging result is reported in a supplementary manner. For example, differential processing may be first performed like using the TDOA. Consistency processing means that two ranging results are processed as measuring a same measurement quantity and units are the same.

In still another implementation, the first information includes an identifier indicating a source of the target distance. That is, the information reported by the first communication device includes the identifier, to indicate a source of a ranging result by using the identifier. For example, 0 represents that the ranging result is from TDOA measurement, and 1 represents that the ranging result is from multi-frequency carrier phase measurement.

In still another implementation, the first information includes information indicating ranging accuracy. For example, the information indicating the ranging accuracy is referred to as a ranging accuracy value. For example, a measurement accuracy value may be described by using [0, 1, ..., 15], and a larger value indicates poorer measurement accuracy of the ranging result. For example, the measurement may be linear measurement, for example, 0 represents that the measurement accuracy is 0 centimeters, 1 represents that the measurement accuracy is 10 centimeters, and 15 represents that the measurement accuracy is 1.5 meters. Alternatively, the measurement may be exponential measurement. For example, 0 represents that the measurement accuracy is one millimeter, 1 represents that the measurement accuracy is two millimeters, and 15 represents that the measurement accuracy is 32 meters. This is not limited in embodiments of this application.

According to the positioning method provided in this embodiment of this application, after receiving the one or more reference signals sent by the second communication device, the first communication device can determine the N pieces of phase information based on the one or more reference signals, then determine the target distance based on the N pieces of phase information, and send the first information indicating the target distance.

It may be understood that, in this embodiment, the first communication device further determines the target distance with reference to a mapping relationship between a distance between communication devices, a phase, and a frequency after determining the first distance. Therefore, the positioning method provided in this embodiment has higher accuracy.

With reference to FIG. 5, in an optional embodiment, when the method for performing ranging between communication devices is applied to an uplink and downlink positioning scenario in a fifth generation mobile communication system, the first communication device is a terminal device, the second communication device is an access network device, and the reference signal includes a PRS.

With reference to FIG. 5, in an optional embodiment, when the method for performing ranging between communication devices is applied to an uplink and downlink positioning scenario in a fifth generation mobile communication system, the first communication device is an access network device, the second communication device is a terminal device, and the reference signal includes an SRS.

With reference to FIG. 5, in an optional embodiment, when the method for performing ranging between communication devices is applied to a sidelink positioning scenario, the first communication device is a first terminal device or an RSU, and the second communication device is a second terminal device.

It may be understood that, in the embodiments shown in FIG. 4 and FIG. 5, the target distance is obtained only by synthesizing one first frequency and one first phase. It should be understood that, usually, a low frequency corresponds to a long wavelength, and an integer ambiguity is easier to be solved, but ranging accuracy is poorer; a high frequency corresponds to a short wavelength, and an integer ambiguity is more difficult to be solved, but ranging accuracy is higher. Therefore, during specific implementation, to obtain a higher-accuracy target distance, a series of first frequencies may be obtained by using N frequencies, then a series of first phases corresponding to the series of first frequencies are respectively obtained, and then integer ambiguities of first phases corresponding to different first frequencies are determined level by level. In this way, high-accuracy ranging is implemented.

For example, as shown in FIG. 6, it is assumed that a plurality of frequencies ($f_1, f_2, ..., f_L$) may be used for communication between a transmit end 601 and a receive end 602, and it is assumed that a value relationship is that $f_1, f_2, ..., $ and $f_L$ decrease in sequence, that is, a frequency of $f_1$ is the highest, and a frequency of $f_L$ is the lowest. In this case, for the receive end 602, carrier phases of reference signals at different frequencies may be simultaneously measured. It is assumed that carrier phases respectively corresponding to $f_1, f_2, ..., $ and $f_L$ are represented as ($\phi_1, \phi_2, \cdots, \phi_L$). As shown in FIG. 6, the following formula may be used:

$$\varphi_a = \sum_{i=1}^{L} k_i \varphi_i = 2\pi \left[ \left( \sum_{i=1}^{L} k_i f_i \right) * \frac{d}{c} - N_a \right] + \varepsilon_a$$

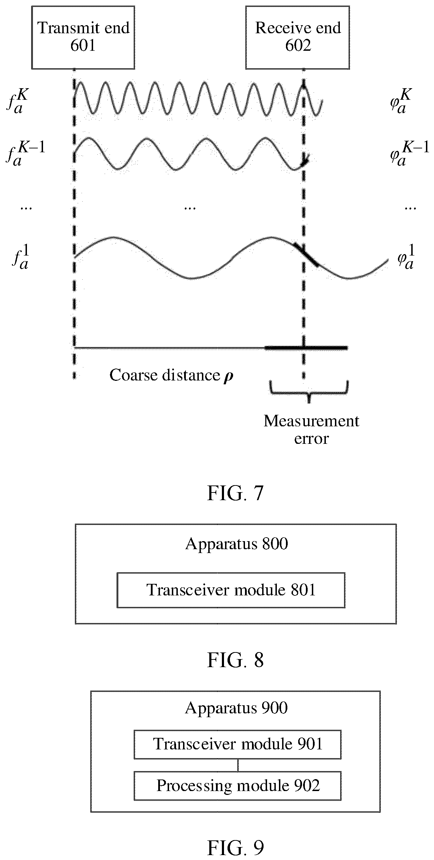

K　gradient　first　frequencies　( $f_a^1, \cdots, f_a^{K-1}, f_a^K$ ) in ascending order are constructed, as shown in FIG. 7, and carrier phase measurement values ( $\varphi_a^1, \cdots, \varphi_a^{K-1}, \varphi_a^K$ ) respectively corresponding to the K first frequencies are calculated. It is assumed that a coarse distance p between the transmit end 601 and the receive end 602 may be obtained in some current manners, for example, in a TOA manner or a TDOA manner. Because a low frequency corresponds to a long wavelength, an integer ambiguity is easier to be solved, but a measurement error is poorer. However, because a high frequency corresponds to a short wavelength, an integer ambiguity is more difficult to be solved, but a measurement error is higher. Therefore, the K gradient first frequencies may be synthesized, and then integer ambiguities of carrier phase measurement values corresponding to the first frequencies are solved level by level from a low frequency to a high frequency, to obtain a high-accuracy ranging result.

For ease of understanding, the following separately describes, based on the description in the embodiment shown in FIG. 5, specific implementation processes in which the first communication device performs positioning in two scenarios.

In a first example, an example in which four frequencies (that is, M is equal to 4) are selected from a frequency band 2.515 G to 2.615 G and four first frequencies and four first phases are synthesized is used to describe a high-accuracy ranging method implemented in an uplink and downlink communication scenario. Specifically, the following steps may be included during implementation.

Step 1: Select four frequencies in the frequency band.

In this embodiment, the four selected frequencies are respectively represented as $f_1, f_2, f_3,$ and $f_4$.

For the selected frequencies, sending a reference signal of a corresponding frequency may be agreed on in advance by a 5G network, or an LMF server or an access network device may select and configure a frequency before a reference signal is sent, or an access network device or a terminal device may send a selected frequency before sending a reference signal.

A frequency selection method may be that after the four frequencies are subtracted from each other, several first frequencies that meet or are close to a geometric sequence may be found. A sequence with a difference between step-by-step multiples (proportionality coefficients) being less than one time may be considered to be close to the geometric sequence.

For example, the four selected frequencies may be configured or agreed to be $f_1 = 2.515G, f_2 = 2.609G, f_3 = 2.6093G,$ and $f_4 = 2.615G$.

Step 2: The transmit end sends a reference signal to the receive end.

Specifically, the transmit end may send the reference signal at the foregoing four selected frequencies, or a frequency band of the sent reference signal includes the foregoing four frequencies.

For example, the terminal device sends an SRS to the access network device at the foregoing four frequencies, and correspondingly, the access network device receives the SRS; or the access network device sends a PRS to the terminal device at the foregoing four frequencies, and correspondingly, the terminal device receives the PRS.

Step 3: The receive end determines, based on the selected four frequencies, linear combination coefficients respectively corresponding to four synthesized first frequencies, and calculates first phases respectively corresponding to the four first frequencies.

During specific implementation, a quantity of synthesized first frequencies and corresponding linear combination coefficients may be configured by an LMF server or an access network device, or may be implemented by a receive end (which may be an access network device or a terminal device).

For example, a principle of synthesizing the first frequency may be that a linear combination coefficient $k_i$ is as small as possible, for example, is selected from {0,1, -1} as much as possible, and the four synthesized first frequencies meet or are close to a geometric sequence.

For example, four first frequencies

$$f_a^1 = 300\text{K}, f_a^2 = 6\text{M}, f_a^3 = 100\text{M}$$ , and

$f_a^4 =$ 2.515G may be configured to be synthesized, where $f_a^2$ represents a 1st synthesized first frequency, $f_a^2$ represents a 2nd synthesized first frequency, $f_a^3$ represents a 3rd synthesized first frequency, and $f_a^4$ represents a 4th synthesized first frequency. Linear combination coefficients corresponding to the four first frequencies are as follows:

$$\begin{cases} k_1 = 0, k_2 = -1, k_3 = 1, k_4 = 0 \\ k_1 = 0, k_2 = -1, k_3 = 0, k_4 = 1 \\ k_1 = -1, k_2 = 0, k_3 = 0, k_4 = 1 \\ k_1 = 1, k_2 = 0, k_3 = 0, k_4 = 0 \end{cases}$$

That is,

$$\begin{cases} f_a^1 = f_3 - f_2 \\ f_a^2 = f_4 - f_2 \\ f_a^3 = f_4 - f_1 \\ f_a^4 = f_4 \end{cases}$$

Corresponding first phases are calculated as follows:

$$\begin{cases} \varphi_a^1 = \varphi_3 - \varphi_2 \\ \varphi_a^2 = \varphi_4 - \varphi_2 \\ \varphi_a^3 = \varphi_4 - \varphi_1 \\ \varphi_a^4 = \varphi_4 \end{cases}$$

$\varphi_a^1$ represents a first phase corresponding to the first frequency $f_a^1$, $\varphi_a^2$ represents a first phase corresponding to the first frequency $f_a^2$, $\varphi_a^3$ represents a first phase corresponding to the first frequency $f_a^3$, and $\varphi_a^4$ represents a first phase corresponding to the first frequency $f_a^4$.

Step 4: The receive end determines, level by level, integer ambiguities corresponding to the four first frequencies, to obtain a target distance.

Specifically, it is assumed that a real distance is 1100 m, a first distance $d_\rho$ comes from an enhanced cell identity (enhanced cell identity, ECID), a measurement error is 500 m, and a carrier phase measurement error is 1/60 carrier wavelengths (6 degrees).

In this case, an integer ambiguity corresponding to the first frequency $f_a^1$ may be first determined according to a formula $N = \left[\dfrac{d * f}{c} - \dfrac{\varphi}{2\pi}\right]$ , where [] represents rounding off; then, a distance measurement value with improved accuracy is obtained according to a formula $\rho = \dfrac{c}{f}(N + \dfrac{\varphi}{2\pi})$ ; and further, the distance measurement value with improved accuracy is used as the first distance, so that an integer ambiguity corresponding to the second frequency $f_a^2$ and a distance measurement value with improved accuracy continue to be determined. In this way, level-by-level solving is performed, and the target distance between the transmit end and the receive end is finally obtained.

In this embodiment, integer ambiguities corresponding to four virtual frequencies are determined level by level as follows:

$$\begin{cases} N_a^1 = \left[\dfrac{d_\rho * f_a^1}{c} - \dfrac{\varphi_a^1}{2\pi}\right] = 1 \\[4mm] N_a^2 = \left[\dfrac{(N_a^1 + \frac{\varphi_a^1}{2\pi}) * f_a^2}{f_a^1} - \dfrac{\varphi_a^2}{2\pi}\right] = 22 \\[4mm] N_a^3 = \left[\dfrac{(N_a^2 + \frac{\varphi_a^2}{2\pi}) * f_a^3}{f_a^2} - \dfrac{\varphi_a^3}{2\pi}\right] = 366 \\[4mm] N_a^4 = \left[\dfrac{(N_a^3 + \frac{\varphi_a^3}{2\pi}) * f_a^4}{f_a^3} - \dfrac{\varphi_a^4}{2\pi}\right] = 9221 \end{cases}$$

Finally, information about the target distance is obtained as $\left( N_a^4 + \frac{\varphi_a^4}{2\pi} \right) * \frac{c}{f_a^4} \in$ 1099.998 - 1100.002m, and a ranging error is approximately 0.002 meters. This meets a requirement of high-accuracy ranging.

Step 5: The receive end reports information about a ranging result to the LMF server.

In this embodiment, if the transmit end is the terminal device, the receive end is the access network device. In this case, the access network device may transmit the information about a ranging result to the LMF by using an NR positioning protocol A (also referred to as "NRPPa") message. If the transmit end is the access network device, the receive end is the terminal device. In this case, the terminal device may transmit the information about a ranging result to the LMF by using a long term evolution positioning protocol (LTE positioning protocol, LPP) message.

Specifically, the following options are available when the information about a ranging result is reported:

(a) information about a second ranging result is reported;

(b) high-accuracy ranging information is reported in a supplementary manner, where for example, a difference from TOA ranging is reported; because the TOA can implement submeter-level positioning, a decimal part of the second ranging result may be selected to be reported; and

(c) the information about a ranging result and a ranging result of the first distance are reported in a unified manner. For example, resolution of reference signal time differences (reference signal time differences, RSTDs) reported in a unified manner should reach a picosecond level. Because the RSTD is a difference between time of arrival at two base stations, before the unified reporting, consistency processing may be required for a multi-frequency carrier phase ranging result and a TDOA ranging result, for example, differential processing is also required for the high-accuracy ranging result. In addition, an identifier is reported to indicate a source of the ranging result. For example, 0 represents that the ranging result is from TOA measurement, and 1 represents that the ranging result is from multi-frequency carrier phase measurement. Alternatively, a measurement accuracy value is reported to indicate measurement accuracy of the ranging result. For example, the measurement accuracy value may be described by using [0, 1, ..., 15], and a larger value indicates poorer measurement accuracy of the ranging result. For example, the measurement may be linear measurement, for example, 0 represents that the measurement accuracy is 0 centimeters, 1 represents that the measurement accuracy is 10 centimeters, and 15 represents that the measurement accuracy is 1.5 meters. Alternatively, the measurement may be exponential measurement. For example, 0 represents that the measurement accuracy is one millimeter, 1 represents that the measurement accuracy is two millimeters, and 15 represents that the measurement accuracy is 32 meters.

According to the method for performing ranging between communication devices provided in this embodiment, reference signals are sent/received on a plurality of frequencies and a plurality of phases corresponding to the plurality of frequencies are measured, then a series of new first frequencies and a series of first phases corresponding to the series of first frequencies are obtained by linearly combining the plurality of frequencies, and then integer ambiguities corresponding to different first frequencies are determined level by level based on a first distance and a first mapping relationship, thereby implementing high-accuracy ranging.

The following describes a ranging method in a second scenario. In this scenario, an example in which three frequencies (that is, M is equal to 3) are selected from "FR1" and three first frequencies and three first phases are synthesized is used to describe a method for implementing high-accuracy ranging. In this scenario, an implementation architecture is sidelink positioning. Specifically, the following steps may be included during implementation.

Step 1: Select three frequencies in the frequency band.

In this embodiment, the three selected frequencies are respectively represented as $f_1$, $f_2$, and $f_3$.

For the selected frequencies, sending a reference signal of a corresponding frequency may be agreed on in advance by a 5G network, or an LMF server or an access network device may select and configure a frequency before a reference signal is sent, or an access network device or a terminal device may send a selected frequency before sending a reference signal.

A carrier frequency selection method may be that after the three frequencies are subtracted from each other, several first frequencies that meet or are close to a geometric sequence may be found. A sequence with a difference between step-by-step multiples (proportionality coefficients) being less than one time may be considered to be close to the geometric sequence.

For example, the three selected carrier frequencies may be configured or agreed to be $f_1$ = 3G, $f_2$ = 3.15G, and $f_3$ = 3.75G.

Step 2: Send a reference signal between terminal devices or send a reference signal between a terminal device and an RSU.

Specifically, an end that sends the reference signal sends the reference signal at the foregoing three selected frequencies, or a frequency band of the sent reference signal includes the foregoing three frequencies.

Step 3: The terminal device that receives the reference signal determines, based on the foregoing three selected frequencies, linear combination coefficients respectively corresponding to the three synthesized first frequencies, and calculates first phases respectively corresponding to the three first frequencies.

During specific implementation, a quantity of synthesized first frequencies and corresponding linear combination coefficients may be configured by an LMF server or an access network device, or may be implemented by an end that receives the reference signal.

For example, a principle of synthesizing the first frequency may be that a linear combination coefficient $k_i$ is as small as possible, for example, is selected from {0,1, -1} as much as possible, and the three synthesized first frequencies meet or are close to a geometric sequence.

For example, three virtual frequencies

$$f_a^1 = 0.15G, f_a^2 = 0.75G$$

, and

$$f_a^3 = 3.75G$$ may be configured to be synthesized, where $f_a^1$ represents a 1st synthesized first frequency, $f_a^2$ represents a 2nd synthesized first frequency, $f_a^3$ represents a 3rd synthesized first frequency, and linear combination coefficients corresponding to the three first frequencies are as follows:

$$\begin{cases} k_1 = -1, k_2 = 1, k_3 = 0 \\ k_1 = 0, k_2 = -1, k_3 = 1 \\ k_1 = 0, k_2 = 0, k_3 = 1 \end{cases}$$

That is,

$$\begin{cases} f_a^1 = f_2 - f_1 \\ f_a^2 = f_3 - f_2 \\ f_a^3 = f_3 \end{cases}$$

Corresponding first phases are calculated as follows:

$$\begin{cases} \varphi_a^1 = \varphi_2 - \varphi_1 \\ \varphi_a^2 = \varphi_3 - \varphi_2 \\ \varphi_a^3 = \varphi_3 \end{cases}$$

$\varphi_a^1$ represents a first phase corresponding to the first frequency $f_a^1$, $\varphi_a^2$ represents a first phase corresponding to the first frequency $f_a^2$, and $\varphi_a^3$ represents a first phase corresponding to the first frequency $f_a^3$.

Step 4: The terminal device that receives the reference signal determines, level by level, integer ambiguities corresponding to the three first frequencies, to obtain a target distance.

Specifically, it is assumed that a real distance is 100 m, a first distance $d_\rho$ is from TDOA ranging, a measurement error is 1 m, and a carrier phase measurement error is 1/10 carrier wavelengths (36 degrees).

In this case, an integer ambiguity corresponding to the first frequency $f_a^1$ may be first determined according to a formula $$N = \left[\frac{d * f}{c} - \frac{\varphi}{2\pi}\right]$$ , where [] represents rounding off; then, a distance measurement value with improved accuracy is obtained according to a

formula $$\rho = \frac{c}{f}(N + \frac{\varphi}{2\pi})$$ ; and further, the distance measurement value with improved accuracy is used as the first distance, so that an integer ambiguity corresponding to the second frequency $f_a^2$ and a distance measurement value with improved accuracy continue to be determined. In this way, level-by-level solving is performed, and the target distance between the transmit end and the receive end is finally obtained.

In this embodiment, integer ambiguities corresponding to four virtual frequencies are determined level by level as follows:

$$\begin{cases} N_a^1 = \left[\frac{d_\rho * f_a^1}{c} - \frac{\varphi_a^1}{2\pi}\right] = 50 \\ N_a^2 = \left[\frac{(N_a^1 + \frac{\varphi_a^1}{2\pi}) * f_a^2}{f_a^1} - \frac{\varphi_a^2}{2\pi}\right] = 250 \\ N_a^3 = \left[\frac{(N_a^2 + \frac{\varphi_a^2}{2\pi}) * f_a^3}{f_a^2} - \frac{\varphi_a^3}{2\pi}\right] = 1250 \end{cases}$$

Finally, information about the target distance is

obtained as $$(N_a^3 + \frac{\varphi_a^3}{2\pi}) * \frac{c}{f_a^3} \in$$ 99.992-100.008m, and a ranging error is approximately 0.008 meters. This meets a requirement of high-accuracy ranging.

Step 5: The terminal device that receives the reference signal reports information about a ranging result to the terminal device or the RSU that sends the reference signal.

Specifically, in the sidelink communication scenario, if an end that sends the reference signal is the terminal device or the RSU, and an end that receives the reference signal is the terminal device, the end that receives the reference signal may send, by using a sidelink message, the information about a ranging result to the terminal device or the RSU that sends the reference signal. Alternatively, if an end that sends the reference signal is the terminal device, and an end that receives the reference signal is the RSU, the RSU may send, by using a sidelink message, the information about a ranging result to the terminal device that sends the reference signal.

Specifically, in this embodiment, the following options are available when the ranging result is reported:

(a) information about a target distance result is reported;
(b) high-accuracy ranging information is reported in a supplementary manner, where for example, a difference from TOA ranging is reported; because the TOA can implement submeter-level positioning, a decimal part of the target distance may be selected to be reported; and
(c) the information about a ranging result and a ranging result of the first distance are reported in a unified manner. For example, if RSTDs are reported in a unified manner, resolution of the RSTDs should reach a picosecond level. Because the RSTD is a difference between time of arrival at two base stations, before the unified reporting, consistency processing may be required for a multi-frequency carrier phase ranging result and a TDOA ranging result, for example, differential processing is also required for the high-accuracy ranging result. In addition, an identifier is reported to indicate a source of the ranging result. For example, 0 represents that the ranging result is from TOA measurement, and 1 represents that the ranging result is from multi-frequency carrier phase measurement. Alternatively, a measurement accuracy value is reported to indicate measurement accuracy of the ranging result. For example, the measurement accuracy value may be described by using [0, 1, ..., 15], and a larger value indicates poorer measurement accuracy of the ranging result. For example, the measurement may be linear measurement, for example, 0 represents that the measurement accuracy is 0 centimeters, 1 represents that the measurement accuracy is 10 centimeters, and 15 represents that the measurement accuracy is 1.5 meters. Alternatively, the measurement may be exponential measurement. For example, 0 represents that the measurement accuracy is one millimeter, 1 represents that the measurement accuracy is two millimeters, and 15 represents that the measurement accuracy is 32 meters.

In the positioning method provided in this embodiment, a sidelink positioning scenario is further considered. In this embodiment, the terminal device may choose to send the high-accuracy ranging information, including a form of a high-accuracy ranging result, measurement accuracy, a source of a ranging result, and the like.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of each device may be obtained through division according to the foregoing method example. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

When each functional module is obtained through division based on each corresponding function, FIG. 8 is a diagram of a structure of a positioning apparatus according to an embodiment of this application. The apparatus 800 may be a communication device, may be a component (for example, a processor, a chip, or a chip system) of the communication device, or may be a logical module or software that can implement all or some of functions of the communication device. The apparatus 800 includes a transceiver module 801.

In an embodiment, the transceiver module 801 is included in a first communication device. In this example, the transceiver module 801 is configured to receive one or more reference signals sent by a second communication device. The transceiver module 801 is further configured to send N pieces of phase information, where the N pieces of phase information are obtained based on the one or more reference signals, the N pieces of phase information are used to determine a distance between the first communication device and the second communication device, and N is a positive integer.

In an example, the transceiver module 801 may be configured to perform the step of receiving the one or more reference signals sent by the second communication device in the method in FIG. 4 or FIG. 5.

In another example, the transceiver module 801 may be configured to perform the step of sending, by the first communication device, the N pieces of phase information to the network server in the method in FIG. 4.

In a possible implementation, N is a positive integer greater than or equal to 2.

In a possible implementation, the one or more reference signals are sent by the second communication device on M frequency resources, and M is a positive integer.

In a possible implementation, the N pieces of phase information are N carrier phase values of the one or more reference signals, the N carrier phase values one-to-one correspond to N frequencies of the one or more reference signals, and the N frequencies are included in the M frequency resources.

In a possible implementation, each of the N pieces of phase information is obtained by linearly combining K carrier phase values of the one or more reference signals, the K carrier phase values one-to-one correspond to K frequencies of the one or more reference signals, the K frequencies are included in the M frequency resources, and K is a positive integer.

In a possible implementation, the positioning method is applied to an uplink and downlink positioning scenario in a fifth generation mobile communication system.

In a possible implementation, in the uplink and downlink positioning scenario in the fifth generation mobile communication system, the first communication device is a terminal device, and the second communication device is an access network device.

In a possible implementation, in the uplink and downlink positioning scenario in the fifth generation mobile communication system, the first communication device is an access network device, and the second communication device is a terminal device.

In a possible implementation, the positioning method is applied to a sidelink positioning scenario.

In a possible implementation, in the sidelink positioning scenario, the first communication device is a first terminal device or an RSU, and the second communication device is a second terminal device.

In a possible implementation, in the sidelink positioning scenario, the first communication device is a first terminal device, and the second communication device is an RSU.

In a possible implementation, the reference signal includes one or more of the following information: a PRS, a sounding SRS, a POS-SRS, a TRS, a CSI-RS, a DMRS, a PTRS, and a sidelink reference signal.

In another embodiment, the transceiver module 801 is included in a second communication device. In this embodiment, the transceiver module 801 is configured to send one or more reference signals, where M is a positive integer.

In a possible implementation, the transceiver module 801 is specifically configured to send the one or more reference signals on M frequency resources, where M is a positive integer.

In a possible implementation, the transceiver module 801 is further configured to send a first linear combination coefficient and/or a frequency set, where the first linear combination coefficient indicates a first linear relationship, the frequency set includes N frequencies, N is a positive integer, and the first linear relationship indicates a mapping relationship between the N frequencies and a first frequency.

In an example, the transceiver module 801 may be configured to perform the step of sending, by the second communication device, the one or more reference signals in the method in FIG. 4 or FIG. 5.

FIG. 9 is a diagram of a structure of a positioning apparatus according to an embodiment of this application. The apparatus 900 may be a communication device, may be a component (for example, a processor, a chip, or a chip system) of the communication device, or may be a logical module or software that can implement all or some of functions of the communication device. The apparatus 900 includes a transceiver module 901 and a processing module 902.

In an embodiment, the transceiver module 901 and the processing module 902 are included in a network server. Specifically, in this embodiment, the transceiver module 901 is configured to receive N pieces of phase information from a first communication device, where the N pieces of phase information are obtained based on one or more reference signals sent by a second communication device, the N pieces of phase information are used to determine a distance between the first communication device and the second communication device, and N is a positive integer; and the processing module 902 is configured to determine the distance between the first communication device and the second communication device based on the N pieces of phase information.

In an example, the processing module 902 may be configured to perform the step of determining, by the network server, the distance between the first communication device and the second communication device based on the N pieces of phase information in the method in FIG. 4.

In a possible implementation, the processing module 902 is specifically configured to: determine the distance between the first communication device and the second communication device based on a first frequency, a first phase, and a first mapping relationship, where the first frequency is a frequency value that has a first linear relationship with N pieces of frequency information, the N pieces of frequency information one-to-one correspond to the N pieces of phase information, the first phase is a phase value that has the first linear relationship with the N pieces of phase information, and the first mapping relationship includes a mapping relationship between a distance between communication devices, a phase, and a frequency.

In a possible implementation, the processing module 902 is specifically configured to: determine a first integer ambiguity based on a first distance, the first frequency, the first phase, and the first mapping relationship; and determine the distance between the first communication device and the second communication device based on the first integer ambiguity, the first frequency, the first phase, and the first mapping relationship.

In a possible implementation, the first mapping relationship meets the following relational expression:

$$\rho = \frac{c}{f}(N + \frac{\varphi}{2\pi})$$

$\rho$ represents a distance between communication devices, $N$ represents an integer ambiguity, $f$ represents a frequency, $\phi$ represents a phase, and c represents a speed of light.

In a possible implementation, the transceiver module 901 is further configured to receive a first linear combination coefficient and/or a frequency set, where the first linear combination coefficient indicates the first linear relationship, and the frequency set includes the N frequencies.

In a possible implementation, the first linear combination coefficient is one or more of 0, -1, and 1.

In still another embodiment, the transceiver module 901 and the processing module 902 are included in a first communication device. Specifically, in this embodiment, the transceiver module 901 is configured to receive one or more reference signals sent by a second communication device; and the processing module 902 is configured to determine a distance between the first communication device and the second communication device based on N pieces of phase information, where the N pieces of phase information are obtained based on the one or more reference signals, the N pieces of phase information are used to determine the distance between the first communication device and the second communication device, and N is a positive integer. The transceiver module 901 is further configured to send first information, where the first information indicates the distance between the first communication device and the second communication device.

In an example, the transceiver module 901 may be configured to perform the step of sending, by the first communication device, the first information in the method in FIG. 5, or determine the distance between the first communication device and the second communication device based on the N pieces of phase information.

In a possible implementation, the processing module 902 is specifically configured to: determine the distance between the first communication device and the second communication device based on a first frequency, a first phase, and a first mapping relationship, where the first frequency is a frequency value that has a first linear relationship with N pieces of frequency information, the N pieces of frequency information one-to-one correspond to the N pieces of phase information, the first phase is a phase value that has the first linear relationship with the N pieces of phase information, and the first mapping relationship includes a mapping relationship between a distance between communication devices, a phase, and a frequency.

In a possible implementation, the processing module 902 is specifically configured to: determine a first integer ambiguity based on a first distance, the first frequency, the first phase, and the first mapping relationship; and determine the distance between the first communication device and the second communication device based on the first integer ambiguity, the first frequency, the first phase, and the first mapping relationship.

In a possible implementation, the first mapping relationship meets the following relational expression:

$$\rho = \frac{c}{f}(N + \frac{\varphi}{2\pi})$$

$\rho$ represents a distance between communication devices, $N$ represents an integer ambiguity, $f$ represents a frequency, $\phi$ represents a phase, and $c$ represents a speed of light.

In a possible implementation, the transceiver module 901 is further configured to receive a first linear combination coefficient and/or a frequency set, where the first linear combination coefficient indicates the first linear relationship, and the frequency set includes the N frequencies.

The first linear combination coefficient is one or more of 0, -1, and 1.

In a possible implementation, the first information includes the distance between the first communication device and the second communication device.

In a possible implementation, the first information includes one or more of the following information: information about a difference between the distance between the first communication device and the second communication device and the first distance, identifier information of a source of the distance between the first communication device and the second communication device, and accuracy information of the distance between the first communication device and the second communication device.

In a possible implementation, the positioning method is applied to an uplink and downlink positioning scenario in a fifth generation mobile communication system.

In a possible implementation, when the positioning method is applied to the uplink and downlink positioning scenario in the fifth generation mobile communication system, the first communication device is a terminal device, and the second communication device is an access network device.

In a possible implementation, when the positioning method is applied to an uplink and downlink positioning scenario in a fifth generation mobile communication system, the first communication device is an access network device, and the second communication device is a terminal device.

In a possible implementation, the positioning method is applied to a sidelink positioning scenario.

In a possible implementation, when the positioning method is applied to the sidelink positioning scenario, the first communication device is a first terminal device or a roadside unit RSU, and the second communication device is a second terminal device.

In a possible implementation, when the positioning method is applied to the sidelink positioning scenario, the first communication device is a first terminal device, and the second communication device is a roadside unit RSU.

In a possible implementation, the reference signal includes one or more of the following information: a PRS, an SRS, a POS-SRS, a TRS, a CSI-RS, a DMRS, a PTRS, and a sidelink reference signal.

It should be noted that the transceiver module in FIG. 8 or FIG. 9 may further include a receiving module and a sending module. The receiving module may be configured to perform a receiving operation performed by the transceiver module, and the sending module may be configured to perform a sending operation performed by the transceiver module.

In addition, the transceiver module in FIG. 8 or FIG. 9 may be replaced with a transceiver, and a function of the transceiver module may be integrated into the transceiver. This does not constitute a limitation on this application. In this case, the transceiver may further include a receiver and a transmitter. The receiver may be configured to perform a receiving operation performed by the transceiver, and the transmitter may be configured to perform a sending operation performed by the transceiver.

It should be further understood that the transceiver module or the transceiver in this application may alternatively be described as an input/output unit. The input/output unit may further include an input unit and an output unit. The input unit may be configured to perform a receiving action performed by the transceiver module or the transceiver, and the output unit may be configured to perform a sending action performed by the transceiver module or the transceiver.

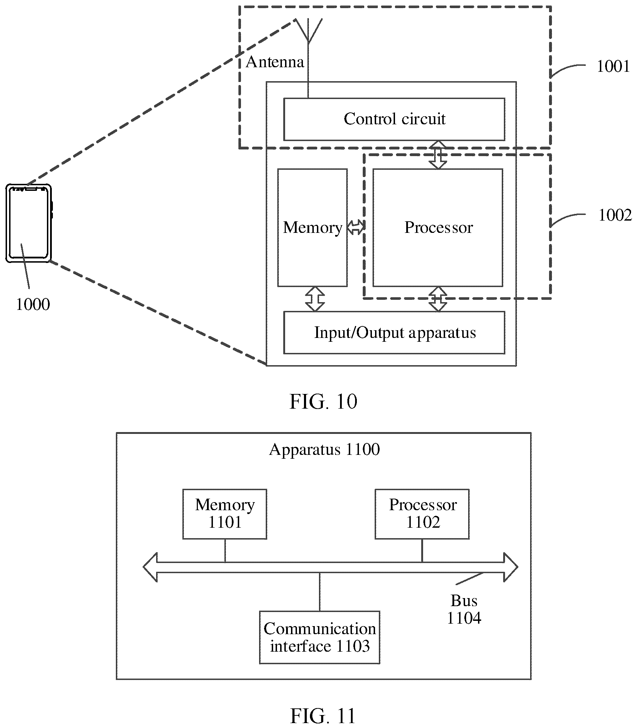

FIG. 10 is a diagram of a structure of a terminal device 1000 according to this application. For ease of description, FIG. 10 shows only main components of the terminal device. As shown in FIG. 10, the terminal device 1000 includes a processor, a memory, a control circuit, an antenna, and an input/output apparatus. The terminal device 1000 may be used in the system shown in FIG. 1, to perform the functions of the terminal device in the foregoing method embodiments.

The processor is mainly configured to process a communication protocol and communication data, control the entire terminal device, execute a software program, and process data of the software program, for example, configured to control the terminal device to perform the actions described in the foregoing method embodiments. The memory is mainly configured to store the software program and data. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in a form of an electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 10 shows only one memory and only one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 10 integrates functions of the baseband processor and the central processing unit. A person skilled in the art may understand that the baseband processor and the central processing unit may be alternatively processors independent of each other, and are connected to each other by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in the embodiment in FIG. 10, the antenna and the control circuit that have a transceiver function may be considered as a transceiver unit 1001 of the terminal device 1000, and the processor that has a processing function may be considered as a processing unit 1002 of the terminal device 1000. As shown in FIG. 10, the terminal device 1000 includes the transceiver unit 1001 and the processing unit 1002. The transceiver unit may also be referred to as a transceiver, a transceiver machine, a transceiver apparatus, or the like. Optionally, a component that is in the transceiver unit 1001 and that is configured to implement a receiving function may be considered as a receiving unit, and a component that is in the transceiver unit 1001 and that is configured to implement a sending function may be considered as a sending unit. In other words, the transceiver unit 1001 includes the receiving unit and the sending unit. For example, the receiving unit may also be referred to as a receiving machine, a receiver, or a receiving circuit, and the sending unit may also be referred to as a transmitting machine, a transmitter, or a transmitting circuit.

The terminal device 1000 shown in FIG. 10 can implement processes related to the terminal device in the method embodiment shown in FIG. 4 or FIG. 5. The operations and/or the functions of the modules in the terminal device 1000 are intended to implement corresponding procedures in the foregoing method embodiments. For details, refer to the descriptions in the foregoing method embodiments. To avoid repetition, detailed descriptions are properly omitted herein.

FIG. 11 is a diagram of a structure of a positioning apparatus according to another embodiment of this application. The management apparatus shown in FIG. 11 may be configured to perform the method according to any one of the foregoing embodiments.

As shown in FIG. 11, an apparatus 1100 in this embodiment includes a memory 1101, a processor 1102, a communication interface 1103, and a bus 1104. The memory 1101, the processor 1102, and the communication interface 1103 are communicatively connected to each other through the bus 1104.

It should be understood that the apparatus 1100 may be specifically the first communication device or the second communication device in the foregoing embodiments, or a function of the first communication device or the second communication device in the foregoing embodiments may be integrated into the apparatus 1100. The apparatus 1100 may be configured to perform steps and/or procedures corresponding to the first communication device or the second communication device in the foregoing embodiments.

The memory 1101 may be a read-only memory (read only memory, ROM), a static storage device, a dynamic storage device, or a random access memory (random access memory, RAM). The memory 1101 may store a program. When the program stored in the memory 1101 is executed by the processor 1102, the processor 1102 may be configured to perform the steps of the methods shown in FIG. 4 and FIG. 5.

The processor 1102 may be a general-purpose central processing unit (central processing unit, CPU), a microprocessor, an application-specific integrated circuit (application-specific integrated circuit, ASIC), or one or more integrated circuits, configured to execute a related program, to implement the method in the method embodiments of this application.

The processor 1102 may alternatively be an integrated circuit chip and has a signal processing capability. In an implementation process, steps of the automated driving vehicle planning method in this embodiment of this application may be completed by using an integrated logic circuit of hardware in the processor 1102, or instructions in a form of software.

The processor 1102 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1101. The processor 1102 reads information in the memory 1101, and completes, in combination with hardware of the processor, functions that need to be performed by units included in the apparatus in this application. For example, the steps/functions in the embodiments shown in FIG. 4 and FIG. 5 may be performed.

The communication interface 1103 may use, but is not limited to, a transceiver apparatus such as a transceiver, to implement communication between the apparatus 1100 and another device or a communication network.

The bus 1104 may include a path for transferring information between components (for example, the memory 1101, the processor 1102, and the communication interface 1103) of the apparatus 1100.

It should be understood that, the apparatus 1100 shown in this embodiment of this application may be an electronic device, or may be a chip configured in the electronic device.

It should be understood that, the processor in this embodiment of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device, such as a server or a data center, including one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

It should be further understood that the solutions in embodiments of this application may be appropriately combined for use, and explanations or descriptions of terms in the embodiments may be mutually referenced or explained in the embodiments. This is not limited.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

**Claims**

1. A positioning method, applied to a first communication device, comprising:

   receiving one or more reference signals sent by a second communication device; and
   sending N pieces of phase information, wherein the N pieces of phase information are obtained based on the one or more reference signals, the N pieces of phase information are used to determine a distance between the first communication device and the second communication device, and N is a positive integer.

2. The method according to claim 1, wherein the one or more reference signals are sent by the second communication device on M frequency resources, and M is a positive integer.

3. The method according to claim 2, wherein the N pieces of phase information are N carrier phase values of the one or more reference signals, the N carrier phase values one-to-one correspond to N frequencies of the one or more reference signals, and the N frequencies are comprised in the M frequency resources.

4. The method according to claim 2, wherein each of the N pieces of phase information is obtained by linearly combining K carrier phase values of the one or more reference signals, the K carrier phase values one-to-one correspond to K frequencies of the one or more reference signals, the K frequencies are comprised in the M frequency resources, and K is a positive integer.

5. The method according to any one of claims 1 to 4, wherein the method further comprises:
   sending N pieces of frequency information, wherein the N pieces of frequency information one-to-one correspond to the N pieces of phase information.

6. A positioning method, comprising:

   receiving N pieces of phase information from a first communication device, wherein the N pieces of phase information are obtained based on one or more reference signals sent by a second communication device, the N pieces of phase information are used to determine a distance between the first communication device and the second communication device, and N is a positive integer; and
   determining the distance between the first communication device and the second communication device based on the N pieces of phase information.

7. The method according to claim 6, wherein the determining the distance between the first communication device and the second communication device based on the N pieces of phase information comprises:
   determining the distance between the first communication device and the second communication device based on a first frequency, a first phase, and a first mapping relationship, wherein the first frequency is a frequency value that has a first linear relationship with N pieces of frequency information, the N pieces of frequency information one-to-one correspond to the N pieces of phase information, the first phase is a phase value that has the first linear relationship with the N pieces of phase information, and the first mapping relationship comprises a mapping relationship between a distance between communication devices, a phase, and a frequency.

8. The method according to claim 7, wherein the determining the distance between the first communication device and the second communication device based on a first frequency, a first phase, and a first mapping relationship comprises:

   determining a first integer ambiguity based on a first distance, the first frequency, the first phase, and the first mapping relationship; and
   determining the distance between the first communication device and the second communication device based on the first integer ambiguity, the first frequency, the first phase, and the first mapping relationship.

9. The method according to claim 7 or 8, wherein the method further comprises:
   receiving a first linear combination coefficient and/or a frequency set, wherein the first linear combination coefficient indicates the first linear relationship, and the frequency set comprises the N pieces of frequency information.

10. A positioning method, applied to a first communication device, comprising:

receiving one or more reference signals sent by a second communication device;
determining a distance between the first communication device and the second communication device based on N pieces of phase information, wherein the N pieces of phase information are obtained based on the one or more reference signals, the N pieces of phase information are used to determine the distance between the first communication device and the second communication device, and N is a positive integer; and
sending first information, wherein the first information indicates the distance between the first communication device and the second communication device.

11. The method according to claim 10, wherein the determining a distance between the first communication device and the second communication device based on N pieces of phase information comprises: determining the distance between the first communication device and the second communication device based on a first frequency, a first phase, and a first mapping relationship, wherein the first frequency is a frequency value that has a first linear relationship with N pieces of frequency information, the N pieces of frequency information one-to-one correspond to the N pieces of phase information, the first phase is a phase value that has the first linear relationship with the N pieces of phase information, and the first mapping relationship comprises a mapping relationship between a distance between communication devices, a phase, and a frequency.

12. The method according to claim 11, wherein the determining the distance between the first communication device and the second communication device based on a first frequency, a first phase, and a first mapping relationship comprises:

determining a first integer ambiguity based on a first distance, the first frequency, the first phase, and the first mapping relationship; and
determining the distance between the first communication device and the second communication device based on the first integer ambiguity, the first frequency, the first phase, and the first mapping relationship.

13. The method according to claim 11 or 12, wherein the method further comprises:
receiving a first linear combination coefficient and/or a frequency set, wherein the first linear combination coefficient indicates the first linear relationship, and the frequency set comprises the N pieces of frequency information.

14. The method according to any one of claims 10 to 13, wherein the first information comprises the distance between the first communication device and the second communication device.

15. The method according to any one of claims 10 to 13, wherein the first information comprises one or more of the following information: information about a difference between the distance between the first communication device and the second communication device and the first distance, identifier information of a source of the distance between the first communication device and the second communication device, and accuracy information of the distance between the first communication device and the second communication device.

16. The method according to any one of claims 7 to 9 or any one of claims 11 to 13, wherein the first mapping relationship meets the following relational expression:

$$\rho = \frac{c}{f}\left(N + \frac{\varphi}{2\pi}\right),$$

wherein
$\rho$ represents a distance between communication devices, $N$ represents an integer ambiguity, $f$ represents a frequency, $\phi$ represents a phase, and c represents a speed of light.

17. The method according to any one of claims 1 to 16, wherein the reference signal comprises one or more of the following information: a positioning reference signal PRS, a sounding reference signal SRS, a positioning sounding reference signal POS-SRS, a tracking reference signal TRS, a channel state information-reference signal CSI-RS, a demodulation reference signal DMRS, a phase tracking reference signal PTRS, and a sidelink reference signal.

18. The method according to any one of claims 1 to 17, wherein N is a positive integer greater than or equal to 2.

19. A positioning apparatus, used in a first communication device, comprising:

a receiving module, configured to receive one or more reference signals sent by a second communication device; and

a sending module, configured to send N pieces of phase information, wherein the N pieces of phase information are obtained based on the one or more reference signals, the N pieces of phase information are used to determine a distance between the first communication device and the second communication device, and N is a positive integer.

20. The apparatus according to claim 19, wherein the one or more reference signals are sent by the second communication device on M frequency resources, and M is a positive integer.

21. The apparatus according to claim 20, wherein the N pieces of phase information are N carrier phase values of the one or more reference signals, the N carrier phase values one-to-one correspond to N frequencies of the one or more reference signals, and the N frequencies are comprised in the M frequency resources.

22. The apparatus according to claim 20, wherein each of the N pieces of phase information is obtained by linearly combining K carrier phase values of the one or more reference signals, the K carrier phase values one-to-one correspond to K frequencies of the one or more reference signals, the K frequencies are comprised in the M frequency resources, and K is a positive integer.

23. The apparatus according to any one of claims 19 to 22, wherein the sending module is further configured to:
send N pieces of frequency information, wherein the N pieces of frequency information one-to-one correspond to the N pieces of phase information.

24. A positioning apparatus, comprising:

a transceiver module, configured to receive N pieces of phase information from a first communication device, wherein the N pieces of phase information are obtained based on one or more reference signals sent by a second communication device, the N pieces of phase information are used to determine a distance between the first communication device and the second communication device, and N is a positive integer; and
a processing module, configured to determine the distance between the first communication device and the second communication device based on the N pieces of phase information.

25. The apparatus according to claim 24, wherein the processing module is specifically configured to:
determine the distance between the first communication device and the second communication device based on a first frequency, a first phase, and a first mapping relationship, wherein the first frequency is a frequency value that has a first linear relationship with N pieces of frequency information, the N pieces of frequency information one-to-one correspond to the N pieces of phase information, the first phase is a phase value that has the first linear relationship with the N pieces of phase information, and the first mapping relationship comprises a mapping relationship between a distance between communication devices, a phase, and a frequency.

26. The apparatus according to claim 25, wherein the processing module is further configured to:

determine a first integer ambiguity based on a first distance, the first frequency, the first phase, and the first mapping relationship; and
determine the distance between the first communication device and the second communication device based on the first integer ambiguity, the first frequency, the first phase, and the first mapping relationship.

27. The apparatus according to claim 25 or 26, wherein the transceiver module is further configured to:
receive a first linear combination coefficient and/or a frequency set, wherein the first linear combination coefficient indicates the first linear relationship, and the frequency set comprises the N pieces of frequency information.

28. A communication system, wherein the communication system comprises a first communication device configured to perform the method according to any one of claims 19 to 23, and comprises a network server configured to perform the method according to any one of claims 24 to 27.

29. A positioning apparatus, used in a first communication device, comprising:

a transceiver module, configured to receive one or more reference signals sent by a second communication device; and
a processing module, configured to determine a distance between the first communication device and the second communication device based on N pieces of phase information, wherein the N pieces of phase information are obtained based on the one or more reference signals, the N pieces of phase information are used to determine the distance between the first communication device and the second communication device, and N is a positive integer, wherein
the transceiver module is further configured to send first information, wherein the first information indicates the distance between the first communication device and the second communication device.

30. The apparatus according to claim 29, wherein the processing module is specifically configured to: determine the distance between the first communication device and the second communication device based on a first frequency, a first phase, and a first mapping relationship, wherein the first frequency is a frequency value that has a first linear relationship with N pieces of frequency information, the N pieces of frequency information one-to-one correspond to the N pieces of phase information, the first phase is a phase value that has the first linear relationship with the N pieces of phase information, and the first mapping relationship comprises a mapping relationship between a distance between communication devices, a phase, and a frequency.

31. The apparatus according to claim 30, wherein the processing module is further configured to:

determine a first integer ambiguity based on a first distance, the first frequency, the first phase, and the first mapping relationship; and determine the distance between the first communication device and the second communication device based on the first integer ambiguity, the first frequency, the first phase, and the first mapping relationship.

32. The apparatus according to claim 30 or 31, wherein the transceiver module is further configured to: receive a first linear combination coefficient and/or a frequency set, wherein the first linear combination coefficient indicates the first linear relationship, and the frequency set comprises the N pieces of frequency information.

33. The apparatus according to any one of claims 29 to 32, wherein the first information comprises the distance between the first communication device and the second communication device.

34. The apparatus according to any one of claims 29 to 32, wherein the first information comprises one or more of the following information: information about a difference between the distance between the first communication device and the second communication device and the first distance, identifier information of a source of the distance between the first communication device and the second communication device, and accuracy information of the distance between the first communication device and the second communication device.

35. The apparatus according to any one of claims 25 to 27 or any one of claims 30 to 32, wherein the first mapping relationship meets the following relational expression:

$$\rho = \frac{c}{f}\left(N + \frac{\varphi}{2\pi}\right),$$

wherein
$\rho$ represents a distance between communication devices, $N$ represents an integer ambiguity, $f$ represents a frequency, $\phi$ represents a phase, and c represents a speed of light.

36. The apparatus according to any one of claims 19 to 35, wherein the reference signal comprises one or more of the following information: a positioning reference signal PRS, a sounding reference signal SRS, a positioning sounding reference signal POS-SRS, a tracking reference signal TRS, a channel state information-reference signal CSI-RS, a demodulation reference signal DMRS, a phase tracking reference signal PTRS, and a sidelink reference signal.

37. The apparatus according to any one of claims 19 to 36, wherein N is a positive integer greater than or equal to 2.

38. A positioning apparatus, comprising a processor, wherein
the processor is configured to perform the method according to any one of claims 1 to 18.

39. A computer-readable medium, wherein the computer-readable medium stores program code to be executed by a computer, and the program code comprises instructions used to perform the method according to any one of claims 1 to 18.

FIG. 1

FIG. 2

FIG. 3

FIG. 4

Second communication device

First communication device

S501: Send one or more reference signals

S502: Determine a distance between the first communication device and the second communication device based on N pieces of phase information, where the N pieces of phase information are obtained based on the one or more reference signals, the N pieces of phase information are used to determine the distance between the first communication device and the second communication device, and N is a positive integer

S503: Send first information, where the first information indicates the distance between the first communication device and the second communication device

FIG. 5

Transmit end 601

Receive end 602

$f_1$            $\varphi_1$

$f_2$            $\varphi_2$

...        ...

$f_L$            $\varphi_L$

FIG. 6

Transmit end 601

Receive end 602

$f_a^K$             $\varphi_a^K$

$f_a^{K-1}$         $\varphi_a^{K-1}$

...            ...            ...

$f_a^1$            $\varphi_a^1$

Coarse distance $\rho$

Measurement error

FIG. 7

Apparatus 800

Transceiver module 801

FIG. 8

Apparatus 900

Transceiver module 901

Processing module 902

FIG. 9

Antenna

Control circuit

1001

Memory

Processor

1002

Input/Output apparatus

1000

FIG. 10

Apparatus 1100

Memory
1101

Processor
1102

Communication
interface 1103

Bus
1104

FIG. 11

## INTERNATIONAL SEARCH REPORT

| International application No. |
|---|
| **PCT/CN2023/073638** |

| A. | CLASSIFICATION OF SUBJECT MATTER |
|---|---|
| | H04W 4/02(2018.01)i;H04W72/25(2023.01)i;H04W40/20(2009.01)i;H04W64/00(2009.01)i |

According to International Patent Classification (IPC) or to both national classification and IPC

| B. | FIELDS SEARCHED |
|---|---|

Minimum documentation searched (classification system followed by classification symbols)

   IPC: H04W4/-; H04W72/-; H04W40/-; H04W64/-

Documentation searched other than minimum documentation to the extent that such documents are included in the fields searched

Electronic data base consulted during the international search (name of data base and, where practicable, search terms used)

   CNABS; CNTXT; CNKI; BAIDU: 定位, 侧链路, 直连通信, 参考信号, 相位, 距离; VEN; USTXT; EPTXT; WOTXT; IEEE; 3GPP: positioning, side link, V2X, D2D, PC5, reference signal, phase, distance

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111343579 A (TELECOMMUNICATIONS TECHNOLOGY RESEARCH INSTITUTE CO., LTD.) 26 June 2020 (2020-06-26)<br>claims 1, 6, 21, 36 and 44, and description, paragraph [0083] | 1-39 |
| X | CN 110062457 A (TELECOMMUNICATIONS TECHNOLOGY RESEARCH INSTITUTE CO., LTD.) 26 July 2019 (2019-07-26)<br>claims 1-59, and description, paragraphs [0263]-[0653] | 1-39 |
| A | US 2017332192 A1 (QUALCOMM INC.) 16 November 2017 (2017-11-16)<br>entire document | 1-39 |
| A | WO 2015030638 A1 (TELEFONAKTIEBOLAGET LM ERICSSON (PUBL)) 05 March 2015 (2015-03-05)<br>entire document | 1-39 |
| A | WO 2021256586 A1 (LG ELECTRONICS INC.) 23 December 2021 (2021-12-23)<br>entire document | 1-39 |

☐ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 May 2023** | **22 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/073638**

| Patent document cited in search report | | | Publication date (day/month/year) | Patent family member(s) | | | Publication date (day/month/year) |
|---|---|---|---|---|---|---|---|
| CN | 111343579 | A | 26 June 2020 | EP | 3902292 | A1 | 27 October 2021 |
| | | | | EP | 3902292 | A4 | 16 February 2022 |
| | | | | WO | 2020125310 | A1 | 25 June 2020 |
| | | | | JP | 2022514430 | A | 10 February 2022 |
| | | | | US | 2022043099 | A1 | 10 February 2022 |
| | | | | TW | 202106057 | A | 01 February 2021 |
| | | | | TWI | 721710 | B | 11 March 2021 |
| | | | | KR | 20210097784 | A | 09 August 2021 |
| | | | | CN | 111343579 | B | 06 August 2021 |
| | | | | IN | 202127028618 | A | 10 September 2021 |
| CN | 110062457 | A | 26 July 2019 | KR | 20200105506 | A | 07 September 2020 |
| | | | | KR | 102307426 | B1 | 29 September 2021 |
| | | | | EP | 3742829 | A1 | 25 November 2020 |
| | | | | EP | 3742829 | A4 | 10 March 2021 |
| | | | | JP | 2021511508 | A | 06 May 2021 |
| | | | | WO | 2019141090 | A1 | 25 July 2019 |
| | | | | US | 2020408871 | A1 | 31 December 2020 |
| | | | | US | 11353542 | B2 | 07 June 2022 |
| | | | | IN | 202047033145 | A | 11 September 2020 |
| | | | | CN | 110062457 | B | 26 January 2021 |
| US | 2017332192 | A1 | 16 November 2017 | WO | 2017196510 | A1 | 16 November 2017 |
| | | | | EP | 3996432 | A1 | 11 May 2022 |
| | | | | EP | 3456113 | A1 | 20 March 2019 |
| | | | | US | 9998856 | B2 | 12 June 2018 |
| | | | | US | 2018262867 | A1 | 13 September 2018 |
| | | | | US | 10555126 | B2 | 04 February 2020 |
| | | | | US | 2018262868 | A1 | 13 September 2018 |
| | | | | US | 10405145 | B2 | 03 September 2019 |
| | | | | US | 2020178036 | A1 | 04 June 2020 |
| | | | | US | 10939247 | B2 | 02 March 2021 |
| | | | | IN | 201847036680 | A | 26 October 2018 |
| | | | | CN | 109196925 | A | 11 January 2019 |
| | | | | CN | 114157990 | A | 08 March 2022 |
| WO | 2015030638 | A1 | 05 March 2015 | US | 2016212738 | A1 | 21 July 2016 |
| | | | | US | 9848428 | B2 | 19 December 2017 |
| WO | 2021256586 | A1 | 23 December 2021 | KR | 20230015401 | A | 31 January 2023 |
| | | | | EP | 4170923 | A1 | 26 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210130537